# EUROPEAN PATENT APPLICATION

(11) **EP 4 815 483 A1**
(43) Date of publication of application: **30.09.2026**
(21) Application number: 26164549.3
(22) Date of filing: 13.03.2026
(51) Int. Cl.: H04N 23/667, G02B 7/04, G03B 3/10, G03B 5/00, G03B 7/00, G03B 17/02

(54) **OPTICAL APPARATUS, CONTROL METHOD OF THE SAME, AND PROGRAM**

(30) Priority: 26.03.2025 JP 2025051998; 26.03.2025 JP 2025052027
(71) Applicant: Canon Kabushiki Kaisha, Tokyo 146-8501 (JP)
(72) Inventor: TOYODA, Yumi, Ohta-ku, Tokyo, 146-8501 (JP); ICHINOSE, Masami, Ohta-ku, Tokyo, 146-8501 (JP)
(74) Representative: TBK

(57) **Abstract**

An optical apparatus (100) includes a control unit (101) configured to control an optical member according to rotation of an operation member (111). The control unit controls the optical member using a first control method according to rotation of the operation member in a case where an indicator (302, 402, 502) indicates a first range, the optical member using a second control method according to rotation of the operation member in a case where the indicator indicates a second range, and the optical member, in a case where a state during switching between the first and second control methods is a predetermined state, using one of the first or second control method that is selected after the switching, and restricts control of the optical member in a case where the state is not the predetermined state.

## Description

### Field of the Technology

The present disclosure relates to an optical apparatus, a control method of the same, and a program.

### BACKGROUND

### Description of the Related Art

In one conventional optical apparatus, an optical member can be controlled by operating an operation member. Japanese Patent Application Laid-Open No. 2016-206604 discloses a method of switching a control unit for an optical member by operating a ring that is slidable between a first position and a second position in an optical axis direction, to each position.

Another conventional optical apparatus is capable of receiving an operation instruction for a single optical member from a plurality of operation units. Japanese Patent Application Laid-Open No. 11-160604 discloses an image pickup apparatus in which, even when a quick zoom switch is operated during zooming by a rocker (seesaw) switch, the zoom operation by the rocker switch is given priority.

### SUMMARY

The present disclosure in its first aspect provides an optical apparatus as specified in claims 1 and 14. Optional features are specified in claims 2 to 13.

The present disclosure in its second aspect provides a method of controlling an optical apparatus as specified in claim 19.

The present disclosure in its third aspect provides a program as specified in claim 20.

Referring now to the accompanying drawings, a detailed description will be given of embodiments according to the present disclosure. Corresponding elements in respective figures will be designated by the same reference numerals, and a duplicate description thereof will be omitted. Each of the embodiments of the present disclosure described below can be implemented solely or as a combination of a plurality of the embodiments or features thereof where necessary or where the combination of elements or features from individual embodiments in a single embodiment is beneficial.

### BRIEF DESCRIPTION OF THE DRAWINGS

Fig. 1 illustrates a block diagram of imaging systems according to first to sixth embodiments.
Fig. 2 illustrates a flowchart illustrating zoom lens control of a lens apparatus according to the first embodiment.
Figs. 3A and 3B illustrate a zoom operation ring and an exterior barrel of a lens apparatuses according to each of the first, fifth, and sixth embodiments.
Figs. 4A and 4B illustrate a focus operation ring and an exterior barrel of the lens apparatus according to the second embodiment.
Figs. 5A and 5B illustrate an aperture operation ring and an exterior barrel of a lens apparatus according to the third embodiment.
Fig. 6 illustrates a flowchart illustrating aperture control of a lens apparatus according to the fourth embodiment.
Figs. 7A and 7B illustrate an aperture operation ring and an exterior barrel of a lens apparatus according to the fourth embodiment.
Fig. 8 illustrates a flowchart illustrating zoom lens control of a lens apparatus according to the fifth embodiment.
Fig. 9 illustrates a flowchart illustrating zoom lens control of a lens apparatus according to the sixth embodiment.
Fig. 10 illustrates a block diagram of an imaging system according to seventh to twelfth embodiments.
Fig. 11 illustrates a connection state among a camera body, a lens apparatus, and an external device according to the seventh to eleventh embodiments.
Fig. 12 illustrates a connection state among a camera body, a lens apparatus, and an external device according to the twelfth embodiment.
Figs. 13A and 13B illustrate a zoom operation ring and an exterior barrel of a lens apparatus according to the seventh embodiment.
Fig. 14 illustrates a state transition diagram of an operation mode of a zoom lens according to the seventh embodiment.
Figs. 15A and 15B illustrate a focus operation ring and an exterior barrel of a lens apparatus according to the eighth embodiment.
Fig. 16 illustrates a state transition diagram of an operation mode of a focus lens according to the eighth embodiment.
Figs. 17A and 17B illustrate an aperture operation ring and an exterior barrel of a lens apparatus according to the ninth embodiment.
Fig. 18 illustrates a state transition diagram of an operation mode of an aperture stop according to the ninth embodiment.
Figs. 19A and 19B illustrate an aperture operation ring and an exterior barrel according to the tenth embodiment.
Fig. 20 illustrates a state transition diagram of an operation mode of an aperture stop according to the tenth embodiment.
Fig. 21 illustrates a state transition diagram of an operation mode of a focus lens according to the eleventh embodiment.

### DESCRIPTION OF THE EMBODIMENTS

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)TM), a flash memory device, a memory card, and the like.

Referring now to the accompanying drawings, a detailed description will be given of embodiments according to the present disclosure.

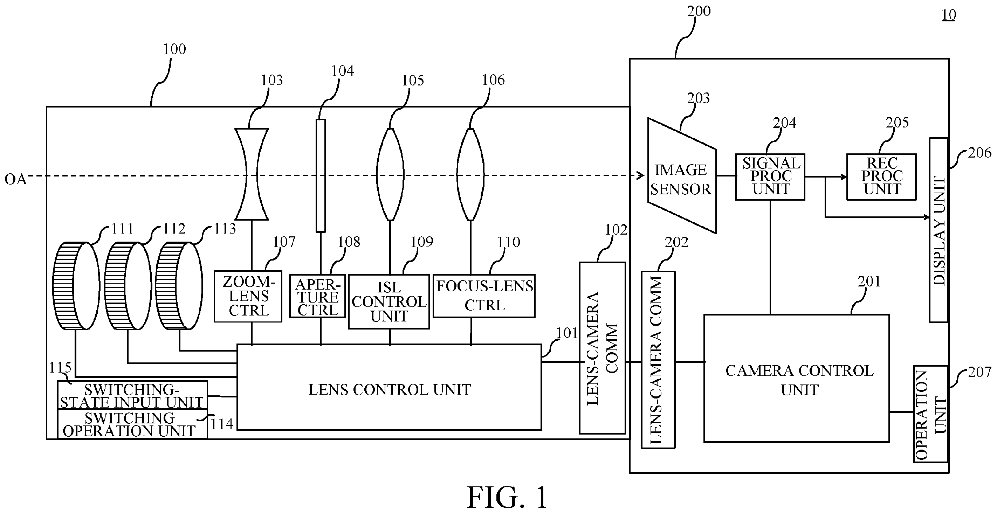

First, with reference to Fig. 1, an imaging system 10 according to first to sixth embodiments will be described. Fig. 1 illustrates a block diagram illustrating an example of a configuration of the imaging system 10 according to each embodiment. The imaging system 10 includes a camera body (image pickup apparatus) 200 and a lens apparatus (interchangeable lens, optical apparatus) 100 attachable to and detachable from the camera body 200. However, each embodiment is not limited to this example, and is also applicable to an image pickup apparatus (optical apparatus) in which the camera body and the lens apparatus are integrated.

First, a specific configuration of the lens apparatus 100 and the camera body 200 will be described. The lens apparatus 100 is mechanically and electrically connected to the camera body 200 via a mount (not illustrated). The lens apparatus 100 receives power supplied from the camera body 200 via a power supply terminal (not illustrated) provided on the mount described above. A lens control unit (lens microcomputer) 101 of the lens apparatus 100 is a control unit that controls a variety of actuators described later using the power received from the camera body 200. The camera body 200 communicates with the lens apparatus 100 via a communication terminal unit provided on the mount described above, and controls the lens apparatus 100 by transmitting control commands.

Next, a configuration of the camera body 200 will be described. The camera body 200 includes a camera control unit (camera microcomputer) 201, a lens-camera communication unit 202, an image sensor 203 having a phase-difference AF sensor function, a signal processing circuit 204, a recording (REC) processing unit 205, a display unit 206, and an operation unit 207.

The camera control unit 201 controls the overall operation of the camera body 200 and includes memories such as RAM, ROM, and EEPROM (not illustrated), as well as a control circuit. The lens-camera communication unit 202 of the camera body 200 includes communication terminals for communicating with the lens-camera communication unit 102 of the lens apparatus 100.

The camera control unit 201 transmits and receives information such as focus detection information, photometric information (light metering information), and ID information to and from the lens-camera communication unit 102 via the lens-camera communication unit 202. The camera control unit 201 also transmits, via the lens-camera communication unit 202, a control command to the lens control unit 101 for an operation of changing a focal length (for zooming) of a zoom lens (optical member) 103 in accordance with a user operation. The camera control unit 201 further transmits, via the lens-camera communication unit 202, a control command to the lens control unit 101 for an operation of adjusting a light amount (for adjusting an aperture value (F-number)) of an aperture (stop) unit (aperture stop, optical member) 104 in accordance with luminance information. The camera control unit 201 transmits, via the lens-camera communication unit 202, a control command to the lens control unit 101 for an operation for focusing of a focus lens (optical member) 106 in accordance with focus information. The camera control unit 201 controls the camera body 200 in accordance with inputs from various setting operation members included in the operation unit 207, such as an imaging (or shooting or image capturing) instruction switch, an aperture value/shutter speed setting dial, and a focal length setting lever.

The image sensor 203 is a photoelectric conversion element such as a CMOS sensor or a CCD sensor, and photoelectrically converts an object image (optical image) formed by an imaging optical system in the lens apparatus 100 to output an electrical signal (analog signal). The analog signal output from the image sensor 203 is converted into a digital signal by an A/D conversion circuit (not illustrated).

The signal processing circuit 204 performs a variety of image processing operations on the digital signal from the A/D conversion circuit to generate an image signal. The signal processing circuit 204 also generates defocus information for focus detection of an object image and luminance information indicating an exposure state from the image signal. The signal processing circuit 204 outputs the image signal to the display unit 206. The display unit 206 displays the image signal output from the signal processing circuit 204 as a live-view image used for confirming composition or focus state. The signal processing circuit 204 also outputs the image signal to the recording processing unit 205. The recording processing unit 205 stores the image signal output from the signal processing circuit 204 as still image data or moving image data in an external memory or the like.

Next, a configuration of the lens apparatus 100 will be described. The lens apparatus 100 includes the lens control unit 101, the lens-camera communication unit 102, an imaging optical system, and a variety of control units that control various actuators for driving the imaging optical system. The lens apparatus 100 also includes a zoom operation ring (zoom ring) 111, a focus operation ring (focus ring) 112, an aperture operation ring (aperture ring) 113, a switching operation unit 114, and a switching-state input unit 115.

The zoom operation ring 111 is an operation member (zoom operation member) operable by a user to operate the zoom lens 103. The focus operation ring 112 is an operation member (focus operation member) operable to operate the focus lens 106. The aperture operation ring 113 is an operation member (aperture operation member) configured to operate the aperture unit 104. Each operation member may be a common operation member for an operation by a first method and an operation by a second method (a common member for performing an operation in the first method and an operation in the second method). Each operation member is not limited to a ring, and may be a slide-type operation member or a rocker switch.

The switching operation unit 114 is a switching unit (selector) that switches a control method of an optical member selected from a plurality of methods including a first method (first mode) and a second method (second mode). The switching-state input unit 115 is an input unit that inputs, to the lens control unit 101, a signal indicating an operation state of the switching operation unit 114 (or whether the switching operation unit 114 is operated or not). In each embodiment, the switching operation unit 114 is not limited to a switch, and may be an operation unit not intended for switching, such as a button that stops driving so that a predetermined member does not operate during switching. Without providing the switching operation unit 114, each operation ring may function as a switching unit.

The lens control unit 101 controls the overall operation of the lens apparatus 100, and includes one or more memories such as RAM, ROM, and EEPROM (not illustrated), a control circuit (control unit, one or more processors), and a measurement unit having a time-measurement function and the like. The memories store instructions. In addition, the memories store, in the form of tables, optical system data corresponding to states of the imaging optical system such as the zoom lens 103, the aperture unit 104, and the focus lens 106, as well as individual lens adjustment data. The control circuit that, upon execution of the instructions, operate to control an optical member according to rotation of the operation member. More specifically, the control circuit operate to control the optical member using (in accordance with) a first control method according to rotation of the operation member in a case where the indicator indicates a first range in the rotation direction, control the optical member using (in accordance with) a second control method according to rotation of the operation member in a case where the indicator indicates a second range in the rotation direction, control the optical member, in a case where a state during switching between the first control method and the second control method is a predetermined state, using (in accordance with) one of the first control method or the second control method that is selected after the switching, and restrict control of the optical member in a case where the state is not the predetermined state. The lens control unit 101 uses data corresponding to the current state of the imaging optical system for control.

The lens-camera communication unit 102 of the lens apparatus 100 includes communication terminals for communicating with the lens-camera communication unit 202 of the camera body 200. The lens control unit 101 transmits and receives information such as focus detection information, photometric information, and ID information to and from the lens-camera communication unit 202 via the lens-camera communication unit 102. The lens control unit 101 also receives, via the lens-camera communication unit 102, control commands from the camera control unit 201 relating to a focal length changing operation, a light amount adjusting operation, and a focusing operation, and receives requests for transmission of optical system data, individual lens adjustment data, states of various operation members, and the like.

The lens control unit 101 is a control unit that controls the operations of respective units within the lens apparatus 100. The lens control unit 101 responds to commands relating to focal length adjustment, light amount adjustment, or focusing among the control commands. In accordance with the commands, the lens control unit 101 issues instructions to a zoom-lens control unit 107, an aperture control unit 108, or a focus-lens control unit 110 to drive the zoom lens 103, the aperture unit 104, or the focus lens 106. Thereby, the lens control unit 101 performs autofocus (AF) processing for controlling a focal length changing operation, a light amount adjusting operation, or a focusing operation by the zoom lens 103, the aperture unit 104, or the focus lens 106.

The lens control unit 101 is capable of detecting an operation amount of each ring using a potentiometer or the like that converts a rotation amount of an operation ring into a voltage. The lens control unit 101 issues an instruction to the focus-lens control unit 110 in accordance with an operation amount of the focus operation ring 112 to drive the focus lens 106, thereby controlling a focusing operation. The lens control unit 101 also issues an instruction to the aperture control unit 108 in accordance with an operation amount of the aperture operation ring 113 to drive the aperture unit 104, thereby controlling a light amount adjusting operation. The lens control unit 101 further issues an instruction to the zoom-lens control unit 107 in accordance with an operation amount of the zoom operation ring 111 to drive the zoom lens 103, thereby controlling a focal length changing operation.

The imaging optical system includes the zoom lens 103 that performs magnification variation, the aperture unit 104 that adjusts a light amount, an image stabilizing lens 105, and the focus lens 106 that performs focusing.

The zoom lens 103 is movable in a direction along an optical axis OA indicated by a broken line in Fig. 1 (optical axis direction). A position detection sensor such as a photo-interrupter detects a position of the zoom lens 103 and outputs position data to the lens control unit 101. The zoom-lens control unit 107 drives an actuator such as a stepping motor or an ultrasonic motor by outputting a drive signal in accordance with an instruction from the lens control unit 101, thereby moving the zoom lens 103 to perform focal length adjustment.

The aperture unit 104 includes aperture blades and sensors such as Hall elements. A state of the aperture blades is detected by the sensors described above and output to the lens control unit 101. The aperture control unit 108 outputs a drive signal in accordance with an instruction from the lens control unit 101 to drive an actuator such as a stepping motor. Thereby, light amount adjustment by the aperture unit 104 is performed.

The image stabilizing lens 105 reduces image blur caused by camera shake or the like by moving in a direction orthogonal to the optical axis OA of the imaging optical system. An image-stabilizing-lens (ISL) control unit 109 outputs a drive signal in accordance with an instruction from the lens control unit 101, based on shake detected by a shake sensor (not illustrated) such as a vibration gyro, to drive an image stabilizing actuator. Thereby, image stabilizing processing for controlling a shift operation of the image stabilizing lens 105 is performed.

The focus lens 106 is movable in the optical axis direction. A position detection sensor such as a photo-interrupter detects a position of the focus lens 106 and outputs position data to the lens control unit 101. The focus-lens control unit 110 drives an actuator such as a stepping motor or an ultrasonic motor by outputting a drive signal in accordance with an instruction from the lens control unit 101, thereby moving the focus lens 106 to perform focusing. The focus lens 106 also corrects image plane variation accompanying magnification variation by the zoom lens 103.

The switching-state input unit 115 outputs an electrical signal to the lens control unit 101 during operation of the switching operation unit 114. Thereby, the lens control unit 101 can detect that the switching operation unit 114 is under operation. The lens control unit 101 controls the zoom lens 103, the focus lens 106, and the aperture unit 104 in accordance with user operations of the zoom operation ring 111, the focus operation ring 112, and the aperture operation ring 113 under the selected control method.

Hereinafter, first to sixth embodiments will be described in detail.

### FIRST EMBODIMENT

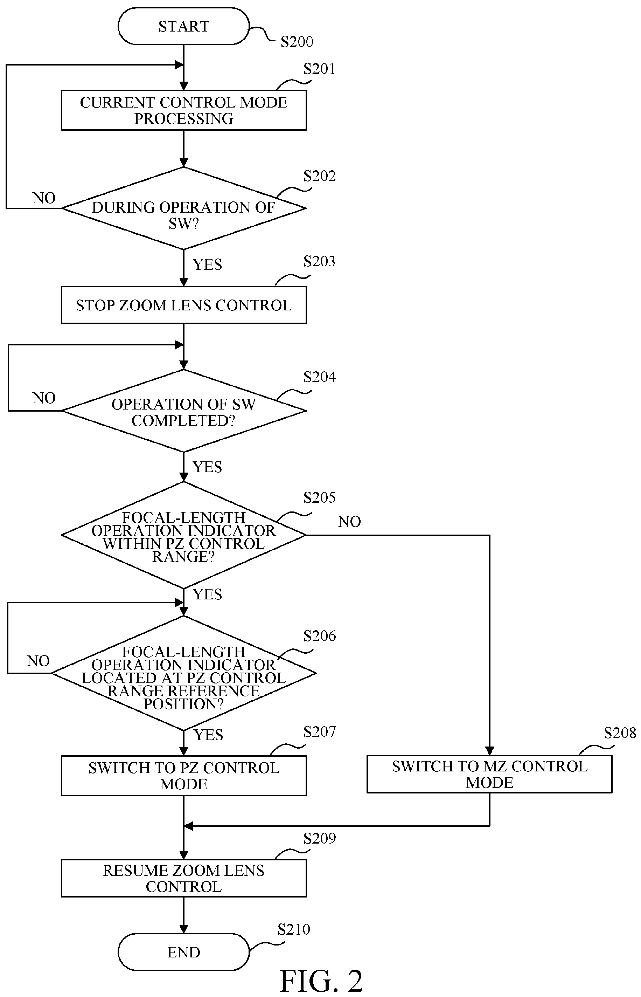

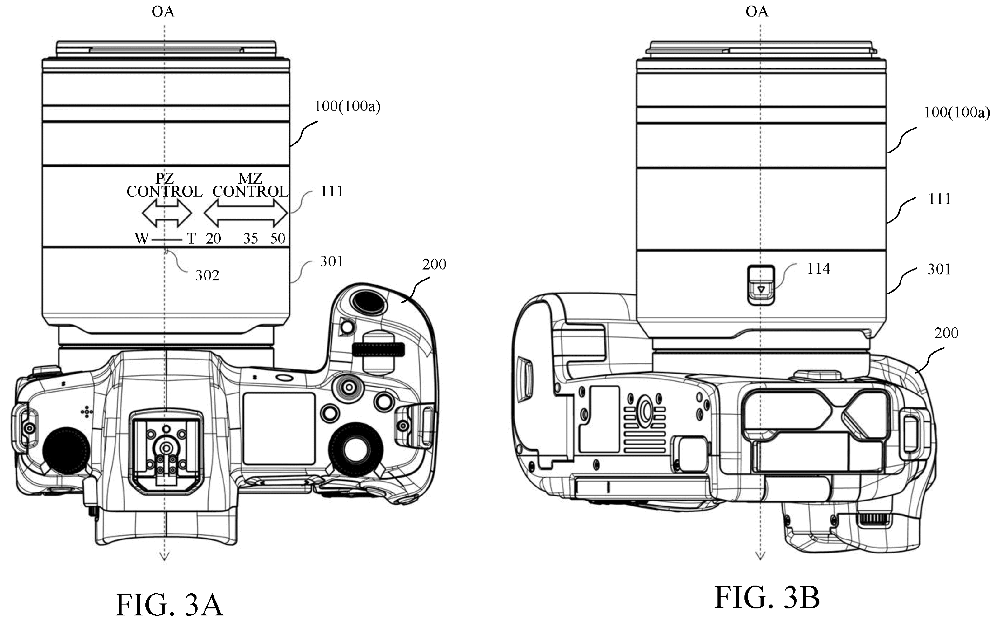

Next, with reference to Figs. 2, 3A, and 3B, the first embodiment will be described. In this embodiment, a control flow is described in which control of the zoom lens 103 is prohibited in accordance with an operation state of the switching operation unit 114 when the control mode of the zoom operation ring 111 is switched, thereby avoiding unintended changes in the angle of view.

Figs. 3A and 3B illustrate the zoom operation ring 111 and an exterior barrel 301 of the lens apparatus 100 (100a). Figs. 3A and 3B illustrate views viewed from different directions. The exterior barrel 301 includes a PZ (power zoom, power mode)/MZ (manual zoom, manual mode) switch (SW), which serves as the switching operation unit 114, and a focal-length operation indicator 302. The zoom operation ring 111 is rotatable by a user about an optical axis OA within a ring movable range.

In a case where the focal-length operation indicator 302 points within a PZ control range (within a first range), the lens control unit 101 sets the control mode of the zoom operation ring 111 to a PZ mode (PZ control mode, first method). The zoom operation ring 111 includes a neutral-position return mechanism that holds the zoom operation ring 111 at a neutral position (reference position, predetermined position) within the PZ control range by a force directed toward the neutral position, such as a force from a torsion spring. In a case where the zoom operation ring 111 is not operated within the PZ control range, the focal-length operation indicator 302 is held at the neutral position. In a case where the focal-length operation indicator 302 points to the neutral position of the PZ control range, the lens control unit 101 stops controlling (or does not control) the zoom lens 103. At this time, the lens control unit 101 may restrict control of the zoom lens 103, for example by issuing a warning to the user (or alerting the user), such as prompting the user not to capture an image during switching. In a case where the focal-length operation indicator 302 points in an indicator T direction from to the neutral position, the lens control unit 101 drives the zoom lens 103 in an indicator (or index) telephoto (TELE) direction (direction toward the telephoto end). On the other hand, in a case where the focal-length operation indicator 302 points in an indicator W direction from the neutral position, the lens control unit 101 drives the zoom lens 103 in an indicator wide-angle (WIDE) direction (direction toward the wide-angle end).

On the other hand, in a case where the focal-length operation indicator 302 points within an MZ control range (within a second range), the lens control unit 101 sets the control mode of the zoom operation ring 111 to an MZ mode (MZ control mode, second method). In the MZ mode, the zoom lens 103 is driven to a position corresponding to a focal length value indicated by the focal-length operation indicator 302 through rotation of the zoom operation ring 111 by the user. Switching between the PZ control range and the MZ control range is enabled by the user sliding the PZ/MZ switch of the switching operation unit 114 to a switching state.

In this embodiment, the user can switch between the PZ mode and the MZ mode by operating the zoom operation ring 111 and the switching operation unit 114. The PZ mode is a mode in which relative drive control (relative position control) by power zoom is performed, that is, a mode in which the zoom lens 103 is driven in a direction corresponding to an operation direction on the basis of the neutral position. Relative position control refers to control in which an optical member is driven in a drive direction corresponding to the operation direction of the operation member. The MZ mode is a mode in which absolute drive control (absolute position control) is performed, that is, a mode in which the zoom lens 103 is driven to a focal length designated by the zoom operation ring 111. Absolute position control refers to control in which an optical member is driven to a target position corresponding to the operation position of the operation member.

Fig. 2 is a flowchart illustrating zoom lens control in the lens apparatus 100. The lens control unit 101 starts processing in step S200, and in step S201 performs processing of the current control mode of the zoom operation ring 111. In a case where the focal-length operation indicator 302 is within the MZ control range, the lens control unit 101 sets the MZ control mode, and the zoom-lens control unit 107 drives the zoom lens 103 to a position corresponding to the focal length indicated by the focal-length operation indicator 302. In a case where the focal-length operation indicator 302 is within the PZ control range, the lens control unit 101 sets the PZ control mode, and the zoom-lens control unit 107 stops controlling the zoom lens 103 or drives the zoom lens 103 in the TELE or WIDE direction in accordance with the position of the focal-length operation indicator 302.

Next, in step S202, the lens control unit 101 detects the state of the PZ/MZ switch of the switching operation unit 114 and determines whether the PZ/MZ switch is being operated. In a case where it is determined in step S202 that the PZ/MZ switch is being operated, the lens control unit 101 stops control by the zoom-lens control unit 107 in step S203 and does not drive the zoom lens 103. At this time, the lens control unit 101 maintains a position of the zoom lens 103 based on the control mode before switching (before the switching starts). In a case where it is determined in step S202 that the PZ/MZ switch is not being operated, the lens control unit 101 performs processing of the current control mode of the zoom operation ring 111.

Next, in step S204, the lens control unit 101 detects the state of the PZ/MZ switch of the switching operation unit 114 and determines whether the operation of the PZ/MZ switch has ended. In a case where it is determined in step S204 that the operation has ended, the lens control unit 101 determines in step S205 whether the focal-length operation indicator 302 is within the PZ control range.

In a case where it is determined in step S205 that the focal-length operation indicator 302 is within the PZ control range, the lens control unit 101 determines in step S206 whether the focal-length operation indicator 302 is located at a PZ control range reference position (neutral position).

In a case where it is determined in step S206 that the focal-length operation indicator 302 is located at the neutral position, the lens control unit 101 switches to the PZ control mode in step S207 and enables control by the zoom-lens control unit 107 in step S209. That is, the lens control unit 101 resumes zoom lens control. The zoom-lens control unit 107 stops controlling the zoom lens 103 or drives the zoom lens 103 in the TELE or WIDE direction in accordance with the position of the focal-length operation indicator 302. Then, in step S210, processing of the lens apparatus 100 ends.

On the other hand, in a case where it is determined in step S205 that the focal-length operation indicator 302 is within the MZ control range, the lens control unit 101 switches to the MZ control mode in step S208 and enables control by the zoom-lens control unit 107 in step S209. The zoom-lens control unit 107 drives the zoom lens 103 to a position corresponding to the focal length indicated by the focal-length operation indicator 302. Then, in step S210, processing of the lens apparatus 100 ends.

In this embodiment, the zoom-lens control unit 107 may reduce a driving speed of the zoom lens 103 to be slower than the normal driving speed (set driving speed) from when control is enabled until driving to the position corresponding to the focal length indicated by the focal-length operation indicator 302 is completed, thereby suppressing abrupt changes in the angle of view.

In this embodiment, in a case where the lens control unit 101 detects that the PZ/MZ switch of the switching operation unit 114 is being operated, control by the zoom-lens control unit 107 is stopped and the zoom lens 103 is not driven. When the operation of the PZ/MZ switch ends, the lens control unit 101 enables control by the zoom-lens control unit 107 and performs processing corresponding to the current control mode in which the focal-length operation indicator 302 is located.

According to this embodiment, the lens apparatus 100 can prohibit (stop) control of the zoom lens 103 until a switching operation is completed when switching the control mode of the zoom operation ring 111, thereby avoiding unintended changes in the angle of view.

### SECOND EMBODIMENT

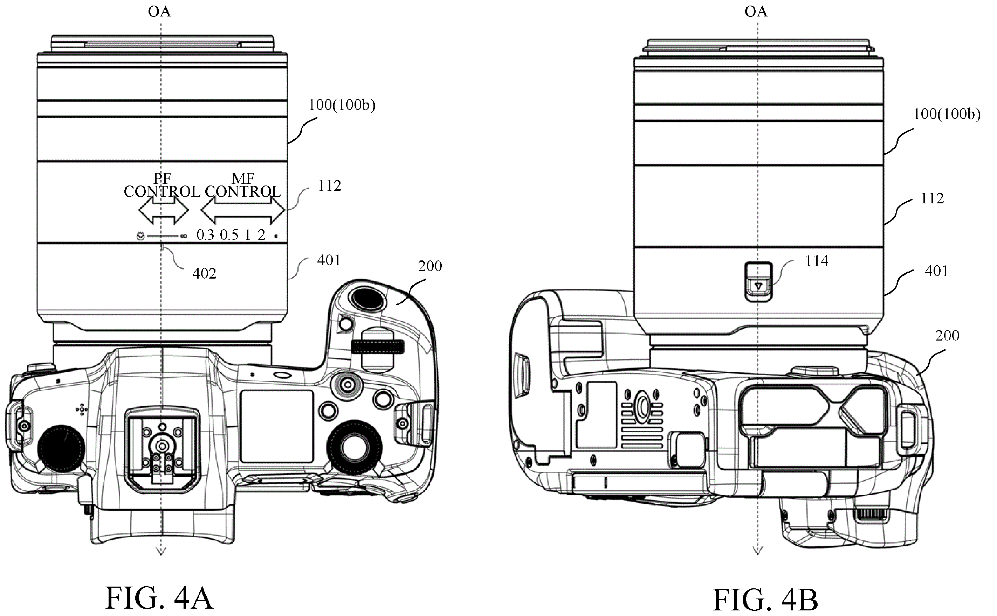

Next, with reference to Figs. 4A and 4B, a second embodiment of the present disclosure will be described. In this embodiment, a control flow is described in which control of a focus lens 106 is prohibited in accordance with an operation state of a switching operation unit 114 when switching a control mode of a focus operation ring 112, thereby avoiding unintended changes in focus.

Figs. 4A and 4B illustrate the focus operation ring 112 and an exterior barrel 401 of a lens apparatus 100 (100b). The exterior barrel 401 includes a PF (power focus, power mode)/MF (manual focus, manual mode) switch (SW), which serves as the switching operation unit 114, and an object-distance operation indicator 402. The focus operation ring 112 is rotatable by a user about an optical axis OA within a ring movable range.

In a case where the object-distance operation indicator 402 points within a PF control range (within a first range), a lens control unit 101 sets a control mode of the focus operation ring 112 to a PF mode (PF control mode, first method). The focus operation ring 112 includes a neutral-position return mechanism that holds the focus operation ring 112 at a neutral position within the PF control range by a force directed toward the neutral position, such as a force from a torsion spring. In a case where the focus operation ring 112 is not operated within the PF control range, the object-distance operation indicator 402 is held at the neutral position. In a case where the object-distance operation indicator 402 points to the neutral position of the PF control range, the lens control unit 101 stops controlling the focus lens 106. In a case where the object-distance operation indicator 402 points toward an indicator infinity direction from the neutral position, the lens control unit 101 drives the focus lens 106 in an infinity direction. On the other hand, in a case where the object-distance operation indicator 402 points toward an indicator close-distance direction from the neutral position, the lens control unit 101 drives the focus lens 106 in the close-distance direction.

On the other hand, in a case where the object-distance operation indicator 402 points within an MF control range (within a second range), the lens control unit 101 sets the control mode of the focus operation ring 112 to an MF mode (MF control mode, second method). In the MF mode, the focus lens 106 is driven to a position corresponding to an object-distance value indicated by the object-distance operation indicator 402 through rotation of the focus operation ring 112 by the user. Switching of the object-distance operation indicator 402 between the PF control range and the MF control range is enabled by the user sliding the PF/MF switch of the switching operation unit 114.

In this embodiment, the user can switch between the PF mode and the MF mode by operating the focus operation ring 112 and the switching operation unit 114. The PF mode is a mode in which relative drive control by power focus is performed, that is, a mode in which the focus lens 106 is driven in a direction corresponding to an operation direction on the basis of the neutral position. The MF mode is a mode in which absolute drive control is performed, that is, a mode in which the focus lens 106 is driven to an object distance designated by the focus operation ring 112.

Control of the focus lens in the lens apparatus 100 is basically the same as the zoom lens control described in the first embodiment with reference to Fig. 2, and therefore a detailed description thereof will be omitted. In Fig. 2, the zoom lens 103 may be replaced with the focus lens 106, PZ control may be replaced with PF control, and MZ control may be replaced with MF control. The zoom operation ring 111 may be replaced with the focus operation ring 112, the zoom-lens control unit 107 may be replaced with a focus-lens control unit 110, and the focal-length operation indicator 302 may be replaced with the object-distance operation indicator 402.

In this embodiment, the focus-lens control unit 110 may reduce a driving speed of the focus lens 106 to be slower than the normal driving speed (set driving speed) from when control is enabled until driving to a position corresponding to the object distance indicated by the object-distance operation indicator 402 is completed, thereby suppressing abrupt changes in focus.

In this embodiment, in a case where the lens control unit 101 detects that the PF/MF switch of the switching operation unit 114 is being operated, the lens control unit 101 stops control by the focus-lens control unit 110 and does not drive the focus lens 106. When the operation of the PF/MF switch ends, the lens control unit 101 enables control by the focus-lens control unit 110 and performs processing corresponding to the current control mode in which the object-distance operation indicator 402 is located.

According to this embodiment, the lens apparatus 100 can prohibit (stop) control of the focus lens 106 until a switching operation is completed when switching the control mode of the focus operation ring 112, thereby avoiding unintended changes in focus.

### THIRD EMBODIMENT

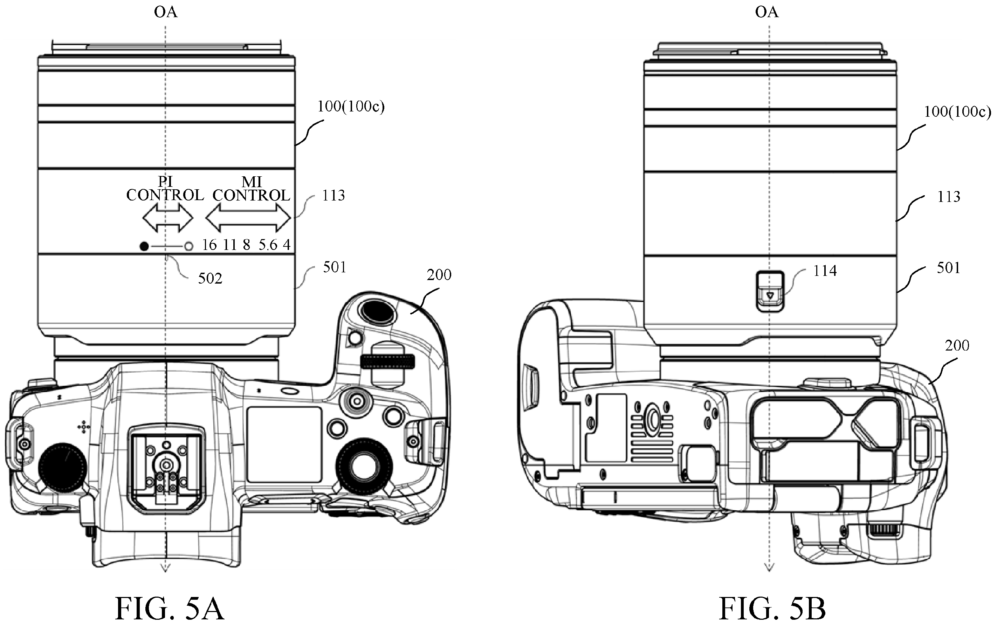

Next, with reference to Figs. 5A and 5B, a third embodiment of the present disclosure will be described. In this embodiment, a control flow is described in which control of an aperture unit 104 is prohibited in accordance with an operation state of a switching operation unit 114 when switching a control mode of an aperture operation ring 113, thereby avoiding unintended changes in light amount.

Figs. 5A and 5B illustrate the aperture operation ring 113 and an exterior barrel 501 of a lens apparatus 100 (100c). The exterior barrel 501 includes a PI (power iris, power mode)/MI (manual iris, manual mode) switch (SW), which serves as the switching operation unit 114, and an aperture operation indicator 502. The aperture operation ring 113 is rotatable by a user about an optical axis OA within a ring movable range.

In a case where the aperture operation indicator 502 points within a PI control range (within a first range), a lens control unit 101 sets a control mode of the aperture operation ring 113 to a PI mode (PI control mode, first method). The aperture operation ring 113 includes a neutral-position return mechanism that holds the aperture operation ring 113 at a neutral position within the PI control range by a force directed toward the neutral position, such as a force from a torsion spring. In a case where the aperture operation ring 113 is not operated within the PI control range, the aperture operation indicator 502 is held at the neutral position. In a case where the aperture operation indicator 502 points to the neutral position of the PI control range, the lens control unit 101 stops controlling the aperture unit 104. In a case where the aperture operation indicator 502 points toward an indicator opening direction from the neutral position, the lens control unit 101 drives the aperture unit 104 in the opening direction. On the other hand, in a case where the aperture operation indicator 502 points toward an indicator closing direction from the neutral position, the lens control unit 101 drives the aperture unit 104 in the closing direction.

On the other hand, in a case where the aperture operation indicator 502 points within an MI control range (within a second range), the lens control unit 101 sets the control mode of the aperture operation ring 113 to an MI mode (MI control mode, second method). In the MI mode, the aperture unit 104 is driven to a position corresponding to an aperture value indicated by the aperture operation indicator 502 through rotation operation of the aperture operation ring 113 by the user, thereby changing an open area amount of the aperture unit 104. Switching of the aperture operation indicator 502 from the PI control range to the MI control range or from the MI control range to the PI control range is enabled by the user sliding the PI/MI switch of the switching operation unit 114.

In this embodiment, the user can switch between the PI mode and the MI mode by operating the aperture operation ring 113 and the switching operation unit 114. The PI mode is a mode in which relative drive control by power iris is performed, that is, a mode in which an open area amount of the aperture unit 104 is changed in a direction corresponding to an operation direction on the basis of the neutral position. The MI mode is a mode in which absolute drive control is performed, that is, a mode in which an open area amount of the aperture unit 104 is changed to an aperture value designated by the aperture operation ring 113.

Control of the aperture in the lens apparatus 100 is basically the same as the zoom lens control described in the first embodiment with reference to Fig. 2, and therefore a detailed description thereof will be omitted. In Fig. 2, the zoom lens 103 may be replaced with the aperture unit 104, PZ control may be replaced with PI control, and MZ control may be replaced with MI control. The zoom operation ring 111 may be replaced with the aperture operation ring 113, the zoom-lens control unit 107 may be replaced with an aperture control unit 108, and the focal-length operation indicator 302 may be replaced with the aperture operation indicator 502.

In this embodiment, the aperture control unit 108 may reduce a driving speed of the aperture unit 104 to be slower than the normal driving speed (set driving speed) from when control is enabled until driving to a position corresponding to an aperture value indicated by the aperture operation indicator 502 is completed, thereby suppressing abrupt changes in light amount.

In this embodiment, in a case where the lens control unit 101 detects the state of the PI/MI switch of the switching operation unit 114 and determines that the PI/MI switch is being operated, the lens control unit 101 stops control by the aperture control unit 108 and does not drive the aperture unit 104. When the operation of the PI/MI switch ends, the lens control unit 101 enables control by the aperture control unit 108 and performs processing corresponding to the current control mode in which the aperture operation indicator 502 is located.

According to this embodiment, the lens apparatus 100 can prohibit (stop) controlling the aperture unit 104 until a switching operation is completed when switching the control mode of the aperture operation ring 113, thereby avoiding unintended changes in light amount.

### FOURTH EMBODIMENT

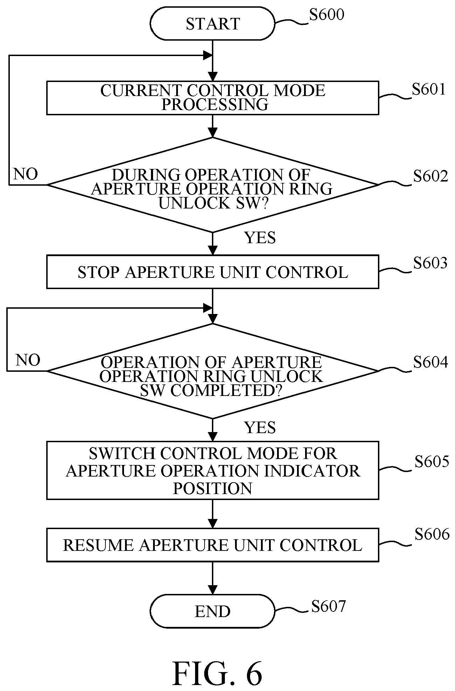

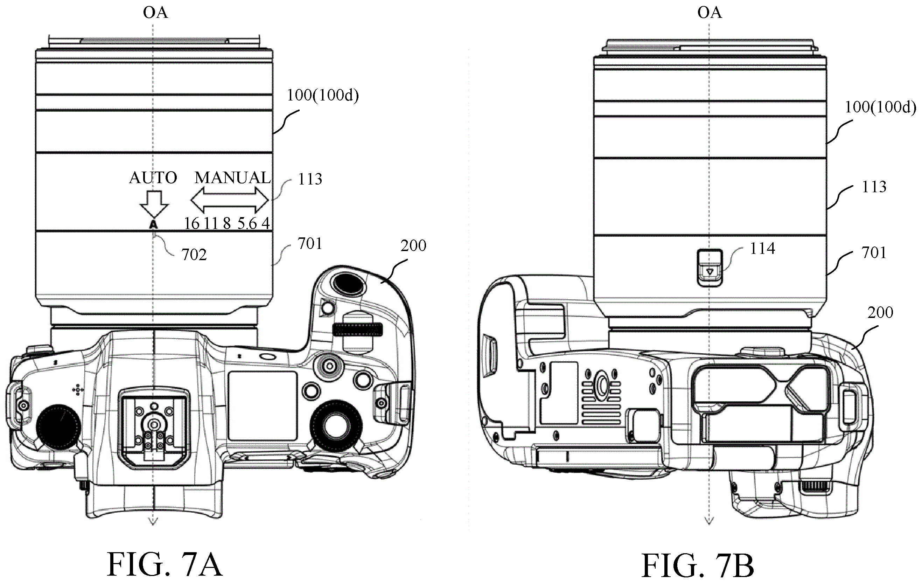

Next, with reference to Figs. 6, 7A, and 7B, a fourth embodiment of the present disclosure will be described. In this embodiment, a control flow is described in which control of the aperture unit 104 is prohibited in accordance with an operation state of a switching operation unit 114 when switching a control mode of the aperture operation ring 113, thereby avoiding unintended changes in light amount.

Figs. 7A and 7B illustrate the aperture operation ring 113 and an exterior barrel 701 of a lens apparatus 100 (100d). The exterior barrel 701 includes an aperture operation ring unlock switch, which serves as the switching operation unit 114, and an aperture operation indicator 702. The aperture operation ring 113 is rotatable by a user about an optical axis OA within a ring movable range.

When the aperture operation indicator 702 points to automatic control (within a first range), the lens control unit 101 sets a control mode of the aperture operation ring 113 to an aperture automatic-control mode (automatic mode (Auto), first method). In the automatic control mode, the lens control unit 101 receives, via a lens-camera communication unit 102, an aperture value set by an operation unit 207 of a camera body 200 or an aperture value set in accordance with luminance information, as a light-amount adjustment control command. The lens control unit 101 outputs a command to the aperture control unit 108 in accordance with the received light-amount adjustment control command, thereby driving the aperture unit 104.

On the other hand, in a case where the aperture operation indicator 702 points to manual (Manual) control (within a second range), the lens control unit 101 sets a control mode of the aperture operation ring 113 to an aperture manual-control mode (MI mode, second method). In the manual control mode, the lens control unit 101 drives the aperture unit 104 to a position corresponding to an aperture value indicated by the aperture operation indicator 702. Switching of the aperture operation indicator 702 from the automatic control range to the manual control range or from the manual control range to the automatic control range is enabled by the user sliding an aperture operation ring unlock switch of the switching operation unit 114.

Fig. 6 is a flowchart illustrating aperture control in the lens apparatus 100. A lens control unit 101 that starts processing in step S600 performs processing corresponding to a current control mode of the aperture operation ring 113 in step S601. In a case where the aperture operation indicator 702 is located within the manual control range, the lens control unit 101 sets the aperture manual-control mode. At this time, the aperture control unit 108 drives the aperture unit 104 to a position corresponding to an aperture value indicated by the aperture operation indicator 702. On the other hand, in a case where the aperture operation indicator 702 is located within the automatic control range, the lens control unit 101 sets the aperture automatic-control mode. At this time, the aperture control unit 108 drives the aperture unit 104 to an aperture value set in the camera body 200 or an aperture value set in accordance with luminance information received as a light-amount adjustment control command.

Next, in step S602, the lens control unit 101 detects the state of an aperture operation ring unlock switch of the switching operation unit 114 and determines whether or not the aperture operation ring unlock switch is being operated. In a case where it is determined in step S602 that the aperture operation ring unlock switch of the switching operation unit 114 is being operated, the flow proceeds to step S603, in which the lens control unit 101 stops control by the aperture control unit 108 and does not drive the aperture unit 104. At this time, the lens control unit 101 maintains a position (an open area amount) of the aperture unit 104 according to a control mode before the start of switching. On the other hand, in a case where it is determined in step S602 that the aperture operation ring unlock switch is not being operated, the lens control unit 101 performs processing corresponding to a current control mode of the aperture operation ring 113 in step S601.

Next, in step S604, the lens control unit 101 detects the state of the aperture operation ring unlock switch of the switching operation unit 114 and determines whether or not the operation of the aperture operation ring unlock switch has ended. In a case where it is determined in step S604 that the operation of the aperture operation ring unlock switch has ended, the lens control unit 101 switches to a control mode in which the aperture operation indicator 702 is located in step S605. Next, in step S606, the lens control unit 101 enables control by the aperture control unit 108, that is, resumes control of the aperture unit 104. Thereby, the aperture control unit 108 performs processing corresponding to the control mode in which the aperture operation indicator 702 is located. Then, in step S607, processing of the lens apparatus 100 is ended.

In this embodiment, the aperture control unit 108 may reduce a driving speed of the aperture unit 104 to be slower than the normal driving speed (set driving speed) from when control is enabled until driving to a position to be driven in a control mode in which the aperture operation indicator 702 is located is completed, thereby suppressing abrupt changes in light amount.

In this embodiment, in a case where the lens control unit 101 detects the state of the aperture operation ring unlock switch of the switching operation unit 114, and determines whether or not the aperture operation ring unlock switch is being operated, the lens control unit 101 stops control by the aperture control unit 108 and does not drive the aperture unit 104. In a case where the operation of the aperture operation ring unlock switch of the switching operation unit 114 ends, the lens control unit 101 enables control by the aperture control unit 108 and performs processing corresponding to a current control mode in which the aperture operation indicator 702 is located.

According to this embodiment, the lens apparatus 100 can prohibit (stop) control of the aperture unit 104 until a switching operation is completed when switching a control mode of the aperture operation ring 113, thereby avoiding unintended changes in light amount. In this embodiment, the operation ring is not limited to the aperture operation ring, and the aperture operation ring may be replaced with a zoom operation ring or a focus operation ring so as to avoid unintended changes in angle of view or unintended changes in focus.

### FIFTH EMBODIMENT

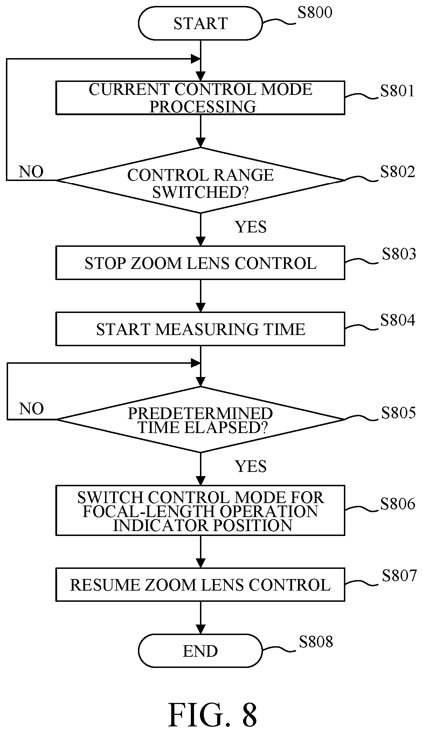

Next, a fifth embodiment of the present disclosure will be described with reference to Figs. 3A, 3B, and 8. In this embodiment, during switching of a control mode of the zoom operation ring 111, control of the zoom lens 103 is prohibited according to an elapsed time after the switching, thereby avoiding unintended changes in angle of view.

Figs. 3A and 3B illustrate the zoom operation ring 111 and an exterior barrel 301 of the lens apparatus 100 according to this embodiment. The exterior barrel 301 includes a focal-length operation indicator 302. Although a PZ/MZ switch of the switching operation unit 114 is illustrated on the exterior barrel 301 in Fig. 3B, the switching operation unit 114 is not essential in this embodiment. In the lens apparatus 100 according to this embodiment, the switching-state input unit 115 is not required, and the operation state of the switching operation unit 114 does not necessarily have to be detected. The zoom operation ring 111 is rotatable by a user within a ring movable range about the optical axis OA.

In a case where the focal-length operation indicator 302 indicates a PZ control range, the lens control unit 101 sets a control mode of the zoom operation ring 111 to a PZ mode (PZ control mode, a first method). The zoom operation ring 111 includes a neutral position return mechanism that holds the zoom operation ring 111 at a neutral position within the PZ control range by a force acting toward the neutral position, such as a force from a torsion spring. In a case where the zoom operation ring 111 is not operated within the PZ control range, the focal-length operation indicator 302 is held at the neutral position. In a case where the focal-length operation indicator 302 indicates the neutral position of the PZ control range, the lens control unit 101 stops controlling the zoom lens 103. In a case where the focal-length operation indicator 302 indicates an indicator T direction (a TELE direction) from the neutral position, the lens control unit 101 drives the zoom lens 103 in the TELE direction. On the other hand, in a case where the focal-length operation indicator 302 indicates an indicator W direction (a WIDE direction) from the neutral position, the lens control unit 101 drives the zoom lens 103 in the WIDE direction.

In a case where the focal-length operation indicator 302 indicates an MZ control range, the lens control unit 101 sets the control mode of the zoom operation ring 111 to an MZ mode (MZ control mode, a second method). In the MZ mode, the zoom lens 103 is driven to a position corresponding to a focal length value indicated by the focal-length operation indicator 302 according to a rotation operation of the zoom operation ring 111 by the user.

Fig. 8 is a flowchart illustrating zoom lens control in the lens apparatus 100. The lens control unit 101 starts processing in step S800 and performs processing corresponding to a current control mode of the zoom operation ring 111 in step S801. In a case where the focal-length operation indicator 302 is in the MZ control range, the lens control unit 101 sets the MZ control mode, and the zoom-lens control unit 107 drives the zoom lens 103 to a position corresponding to the focal length value indicated by the focal-length operation indicator 302. In a case where the focal-length operation indicator 302 is in the PZ control range, the lens control unit 101 sets the PZ control mode, and the zoom-lens control unit 107 stops controlling the zoom lens 103 or drives the zoom lens 103 in the TELE or WIDE direction according to a position of the focal-length operation indicator 302.

Next, in step S802, the lens control unit 101 detects a position of the zoom operation ring 111 and determines whether or not a control range indicated by the focal-length operation indicator 302 has been switched. In a case where it is determined in step S802 that the control range has been switched, the lens control unit 101 stops control by the zoom-lens control unit 107 and does not drive the zoom lens 103 in step S803. At this time, the lens control unit 101 maintains a position of the zoom lens 103 according to a control mode before the start of switching. In a case where it is determined in step S802 that the control range has not been switched, the lens control unit 101 performs processing corresponding to the current control mode of the zoom operation ring 111 in step S801.

Next, in step S804, the lens control unit 101 measures an elapsed time from the switching of the control range. In step S805, the lens control unit 101 determines whether or not a predetermined time has elapsed from the switching of the control range. In a case where the predetermined time has elapsed, the lens control unit 101 switches to a control mode in which the focal-length operation indicator 302 is located in step S806. In a case where the focal-length operation indicator 302 is located in the PZ control range, the lens control unit 101 switches to the PZ control mode.

Next, in step S807, the lens control unit 101 enables control by the zoom-lens control unit 107 and resumes zoom lens control. The zoom-lens control unit 107 stops controlling the zoom lens 103 or drives the zoom lens 103 in the TELE or WIDE direction according to the position of the focal-length operation indicator 302. Then, in step S808, processing of the lens apparatus 100 is ended.

In a case where the focal-length operation indicator 302 is located in the MZ control range, the lens control unit 101 switches to the MZ control mode, and in step S807, enables control by the zoom-lens control unit 107. At this time, the zoom-lens control unit 107 drives the zoom lens 103 to a position corresponding to the focal length value indicated by the focal-length operation indicator 302. Then, in step S808, processing of the lens apparatus 100 is ended.

In this embodiment, the zoom-lens control unit 107 may reduce a driving speed of the zoom lens 103 to be slower than the normal driving speed (set driving speed) from when control is enabled until driving to a position corresponding to the focal length value indicated by the focal-length operation indicator 302 is completed, thereby suppressing abrupt changes in angle of view.

In this embodiment, in a case where an elapsed time after switching by the switching operation unit 114 is shorter than a predetermined time, the lens control unit 101 stops control by the zoom-lens control unit 107 and does not drive the zoom lens 103. In a case where the elapsed time after the switching by the switching operation unit 114 reaches the predetermined time, the lens control unit 101 enables control by the zoom-lens control unit 107 and performs processing corresponding to a current control mode in which the focal-length operation indicator 302 is located.

The lens apparatus 100 can prohibit control of the zoom lens 103 until a switching operation is completed when switching the control mode of the zoom operation ring 111, thereby avoiding unintended changes in angle of view. In this embodiment, enabling or disabling control by the zoom-lens control unit 107 is determined based on an elapsed time from a switching operation. Alternatively, enabling or disabling control by the zoom-lens control unit 107 may be determined based on an elapsed time from when operation of the zoom operation ring 111 stops. In addition, the operation ring is not limited to the zoom operation ring, and the zoom operation ring may be replaced with an aperture operation ring or a focus operation ring so as to avoid unintended changes in light amount or unintended changes in focus.

### SIXTH EMBODIMENT

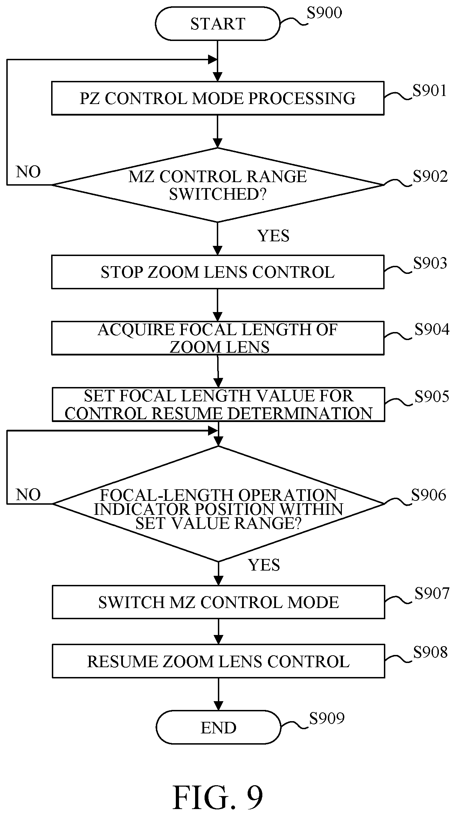

Next, with reference to Figs. 3A, 3B, and 9, a sixth embodiment of the present disclosure will be described. In this embodiment, a control flow is described in which, when a control mode of the zoom operation ring 111 is switched, control of the zoom lens 103 is prohibited in accordance with a focal length value of the zoom lens 103 and a focal length value indicated by the focal-length operation indicator 302, thereby avoiding an unintended change in angle of view.

Figs. 3A and 3B illustrate the zoom operation ring 111 and an exterior barrel 301 of the lens apparatus 100 according to this embodiment. The exterior barrel 301 has the focal-length operation indicator 302. In Fig. 3B, a PZ/MZ switch of the switching operation unit 114 is illustrated on the exterior barrel 301; however, this switch is not essential in this embodiment. In the lens apparatus 100 according to this embodiment, a switching-state input unit 115 is not essential, and the operation state of the switching operation unit 114 may not be detected. The zoom operation ring 111 is rotatable within a ring movable range about an optical axis OA.

In a case where the focal-length operation indicator 302 indicates a PZ control range, the lens control unit 101 sets a control mode of the zoom operation ring 111 to a PZ mode (PZ control mode, first method). The zoom operation ring 111 has a neutral position return mechanism that holds the zoom operation ring 111 at a neutral position within the PZ control range by a force toward the neutral position applied from a torsion spring or the like. In a case where the zoom operation ring 111 is not operated within the PZ control range, the focal-length operation indicator 302 is held at the neutral position. In a case where the focal-length operation indicator 302 indicates the neutral position of the PZ control range, the lens control unit 101 stops controlling the zoom lens 103. In a case where the focal-length operation indicator 302 indicates an indicator T direction (TELE direction) from the neutral position, the lens control unit 101 drives the zoom lens 103 in the TELE direction. On the other hand, in a case where the focal-length operation indicator 302 indicates an indicator W direction (WIDE direction) from the neutral position, the lens control unit 101 drives the zoom lens 103 in the WIDE direction.

On the other hand, in a case where the focal-length operation indicator 302 indicates an MZ control range, the lens control unit 101 sets the control mode of the zoom operation ring 111 to an MZ mode (MZ control mode, second method). In the MZ mode, the zoom lens 103 is driven to a position corresponding to a focal length value indicated by the focal-length operation indicator 302 in accordance with a rotation operation of the zoom operation ring 111 by a user.

Fig. 9 is a flowchart illustrating zoom lens control in the lens apparatus 100. The lens control unit 101, which starts processing in step S900, performs processing of the PZ control mode of the zoom operation ring 111 in step S901. At this time, the zoom-lens control unit 107 stops controlling the zoom lens 103 or drives the zoom lens 103 in the TELE or WIDE direction in accordance with the position of the focal-length operation indicator 302.

Next, in step S902, the lens control unit 101 detects a position of the zoom operation ring 111 and determines whether a control range indicated by the focal-length operation indicator 302 has been switched to the MZ control range. In a case where it is determined in step S902 that the control range indicated by the focal-length operation indicator 302 has been switched to the MZ control range, the lens control unit 101 stops controlling the zoom-lens control unit 107 and does not drive the zoom lens 103 in step S903. At this time, the lens control unit 101 maintains a position of the zoom lens 103 based on the control mode before the switching starts. On the other hand, in a case where it is determined in step S902 that the control range indicated by the focal-length operation indicator 302 has not been switched to the MZ control range, the lens control unit 101 performs the processing of the PZ control mode of the zoom operation ring 111 in step S901.

Next, in step S904, the lens control unit 101 acquires a current focal length value from the position of the zoom lens 103. Then, in step S905, the lens control unit 101 sets a focal length value for determining resumption of control of the zoom lens 103. The focal length value for determining resumption of control may match the focal length value of the zoom lens 103, or may be a value within a predetermined range from the focal length value of the zoom lens 103.

Next, in step S906, the lens control unit 101 determines whether the focal length value indicated by the focal-length operation indicator 302 is within the range of the focal length value set in step S905, that is, whether an optical value indicated by an operation member is within a predetermined range. In a case where it is determined in step S906 that the focal length value indicated by the focal-length operation indicator 302 is within the range of the focal length value set in step S905, the lens control unit 101 switches the control mode of the zoom operation ring 111 to the MZ control mode in step S907.

Next, in step S908, the lens control unit 101 enables control of the zoom-lens control unit 107 (resumes zoom lens control), and the zoom-lens control unit 107 drives the zoom lens 103 to a position corresponding to the focal length value indicated by the focal-length operation indicator 302. Then, in step S909, processing of the lens apparatus 100 ends.

In this embodiment, the zoom-lens control unit 107 may reduce a driving speed of the zoom lens 103 to be lower than the normal driving speed (set driving speed) during a period from when control is enabled until driving to the position corresponding to the focal length value indicated by the focal-length operation indicator 302 is completed, thereby suppressing a rapid change in angle of view.

In this embodiment, in a case where the control range indicated by the focal-length operation indicator 302 is switched from the PZ control range to the MZ control range, the lens control unit 101 stops controlling the zoom-lens control unit 107 and does not drive the zoom lens 103. In a case where the focal length value indicated by the focal-length operation indicator 302 is within a range of focal length values set from the focal length value of the zoom lens 103, the lens control unit 101 enables control of the zoom-lens control unit 107 and performs MZ control mode processing.

According to this embodiment, the lens apparatus 100 can prohibit control of the zoom lens 103 until a switching operation is completed when the control mode of the zoom operation ring 111 is switched, thereby avoiding an unintended change in angle of view. In this embodiment, the operation ring is not limited to the zoom operation ring, and the zoom operation ring may be replaced with an aperture operation ring or a focus operation ring to avoid unintended changes in light amount or focus.

Thus, in each embodiment, a control unit (lens control unit 101) restricts control of an optical member (stops the optical member from moving or issues a warning to a user) when a state during switching of a control method is not a predetermined state. On the other hand, in a case where the state during switching of the control method is the predetermined state, the control unit performs control of the optical member using a control method after the switching (resumes control of the optical member).

The control unit may maintain a position of the optical member based on an operation according to a control method before switching in a case where the state during switching of the control method is not the predetermined state. The predetermined state may be a state in which a (switching) operation of a switching unit (switching operation unit 114) for switching a control method is completed. The control unit may determine whether the state is the predetermined state using a signal indicating an operation state of the switching unit input from the input unit (switching-state input unit 115).

In a case where the control method is the first method and an operation member is at a neutral position, the control unit stops controlling the optical member. In a case where the switching is switching from another method to the first method, the predetermined state may be a state in which the operation member has reached the neutral position after control of the optical member is restricted.

The control unit may determine whether the state is the predetermined state based on a position of the operation member. The control unit may start controlling the optical member using a control method after switching after a predetermined time has elapsed since control of the optical member was restricted. Alternatively, the control unit may start controlling the optical member using the control method after switching after a predetermined time has elapsed since an operation of the operation member was completed.

The control unit may start controlling the optical member using the control method after switching when a position of the operation member (an optical value indicated by the operation member) falls within a predetermined range after control of the optical member is restricted.

In the first method, the control unit performs relative position control of the optical member in accordance with the operation of the operation member, that is, drives the optical member in a direction corresponding to an operation direction from a current position. In the second method, the control unit performs absolute position control of the optical member in accordance with the operation of the operation member, that is, drives the optical member to a target position corresponding to the operation position of the operation member.

The control unit may change a driving speed during control of the optical member using the control method after switching, to be different from a set driving speed (a normal driving speed) of the control method for a predetermined period. The predetermined period may be a period from when control of the optical member is started until a position of the optical member coincides with a position at which the optical member is to be driven by the control method after switching.

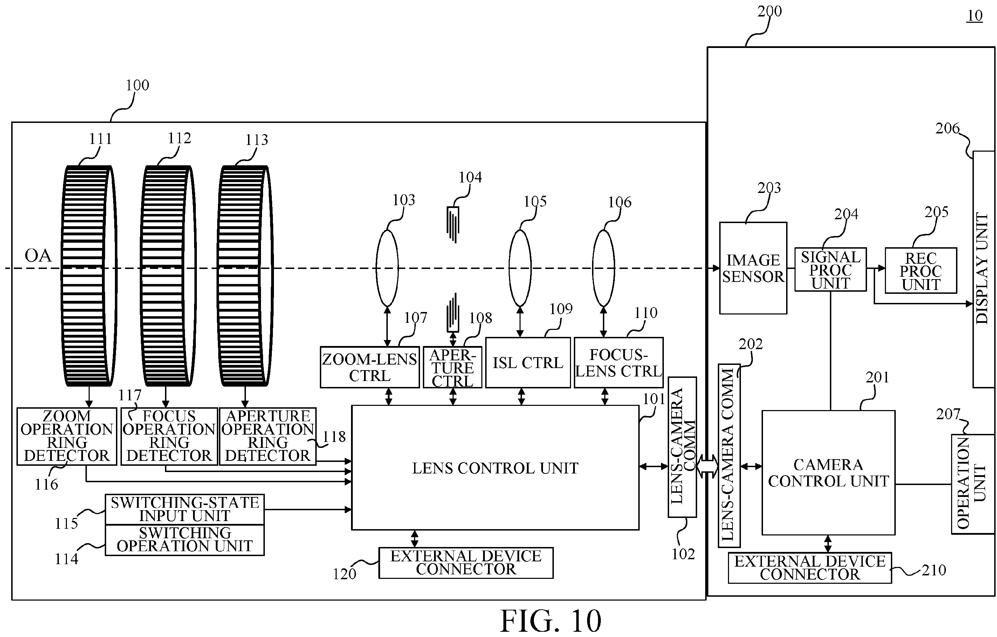

Next, with reference to Fig. 10, an imaging system 10 according to seventh through twelfth embodiments of the present disclosure will be described. Fig. 10 is a block diagram illustrating an example configuration of the imaging system 10 according to each embodiment. The imaging system 10 includes a camera body (image pickup apparatus) 200 and a lens apparatus (interchangeable lens, optical apparatus) 100 that is attachable to and detachable from the camera body 200. However, the present embodiments are not limited to this example, and are also applicable to an image pickup apparatus (optical apparatus) in which the camera body and the lens apparatus are integrated.

First, a specific configuration of the lens apparatus 100 and the camera body 200 will be described. The lens apparatus 100 is mechanically and electrically coupled to the camera body 200 via a mount (not illustrated). The lens apparatus 100 receives power supplied from the camera body 200 via a power terminal provided in the mount. A lens control unit (lens microcomputer) 101 of the lens apparatus 100 is a control unit configured to control various actuators described below using the supplied power. The camera body 200 communicates with the lens apparatus 100 via communication terminals provided in the mount, and controls the lens apparatus 100 by transmitting control commands.

The lens apparatus 100 includes an external-device interface (external connection terminal, connector) 120, such as a USB terminal, and is configured to be connectable to an external device, such as a PC or an accessory (lens accessory), via the external-device interface 120. Thereby, the lens apparatus 100 can receive power supplied from the external device. The lens control unit 101 is communicably coupled to the external device via the external-device interface 120 and is configured to control the lens apparatus 100 in response to a drive instruction (or an external control signal) received from the PC or the accessory. In each embodiment, the external device may be configured to communicate with the lens apparatus 100 via a wired connection or a wireless connection.

Next, a configuration of the camera body 200 will be described. The camera body 200 includes a camera control unit (camera microcomputer) 201, a lens-camera communication unit 202, an image sensor 203 having a phase-difference AF sensor function, a signal processing circuit 204, a recording processing unit 205, a display unit 206, and an operation unit 207.

The camera control unit 201 controls overall operations of the camera body 200 and includes memories such as RAM, ROM, and EEPROM (not illustrated), as well as control circuits. The lens-camera communication unit 202 includes communication terminals for communicating with the lens-camera communication unit 102 of the lens apparatus 100.

The camera control unit 201 is configured to transmit and receive information such as focus detection information, photometric information, and ID information via the lens-camera communication unit 202. The camera control unit 201 is configured to transmit, to the lens control unit 101, control commands for changing a focal length of a zoom lens (optical member) 103 (for zooming) in response to a user operation. The camera control unit 201 also transmits control commands for adjusting a light amount (adjusting an aperture value) of an aperture unit (aperture stop, optical member) 104 based on luminance information. The camera control unit 201 transmits control commands for focusing of a focus lens (optical member) 106 based on focus information via the lens-camera communication unit 202. The camera control unit 201 controls the camera body 200 in response to inputs from various setting operation members included in the operation unit 207, such as an imaging instruction switch, an aperture value/shutter speed setting dial, and a focal length setting lever.

The image sensor 203 is a photoelectric conversion element such as a CMOS sensor or a CCD sensor, and is configured to photoelectrically convert an object image (optical image) formed by the imaging optical system in the lens apparatus 100, and output an electrical signal (analog signal). The analog signal output from the image sensor 203 is converted into a digital signal by an A/D converter (not illustrated).

The signal processing circuit 204 performs various image processing on the digital signal from the A/D converter to generate an image signal. The signal processing circuit 204 also generates defocus information for focus detection of the object image and luminance information indicating the exposure state from the image signal. The signal processing circuit 204 outputs the image signal to the display unit 206. The display unit 206 displays the image signal output from the signal processing circuit 204 as a live-view image used to check the composition, focus state, etc. The signal processing circuit 204 also outputs the image signal to a recording processing unit 205. The recording processing unit 205 stores the image signal output from the signal processing circuit 204 in an external memory or the like as still or moving image data.

The external device connector 210 can be connected to external devices such as a PC or various accessories. This allows the camera control unit 201 of the camera body 200 to communicate with external devices via the external device connector 210 and control the camera body 200 and lens apparatus 100 according to an instruction from the external device.

When controlling the lens apparatus 100, the camera control unit 201 receives a lens drive instruction (external control signal) from an external device such as a PC via an external device connector 210. The camera control unit 201 then controls the lens apparatus 100 by outputting the received drive instruction to the lens control unit 101 via the lens-camera communication units 202 and 102.

Next, the configuration of the lens apparatus 100 will be described. The lens apparatus 100 includes the lens control unit 101, the lens-camera communication unit 102, an imaging optical system, and control units configured to control actuators that drive the imaging optical system. The lens apparatus 100 further includes a zoom operation ring (zoom ring) 111, a focus operation ring (focus ring) 112, an aperture operation ring (aperture ring) 113, a switching operation unit 114, and a switching-state input unit 115.

The zoom operation ring 111 is an operation member (zoom operation member) configured to operate the zoom lens 103, that is, an operation member operable by the user. The focus operation ring 112 is an operation member configured to operate the focus lens 106. The aperture operation ring 113 is an operation member (focus operation member) configured to operate the aperture unit 104. The switching operation unit 114 and the switching-state input unit 115 constitute a selector (switching unit) configured to select a control method for an optical member from among a plurality of methods including a first method (first control method)and a second method (second control method). Each operation member may be a common operation member for both the first method and the second method, or a common member for performing operation by the first method and operation by the second method. Each operation member does not have to be a ring, and may be a slide-type operation member or a rocker switch, etc.

The lens control unit 101 is responsible for overall control of the lens apparatus 100, and includes one or more memories such as RAM, ROM, and EEPROM (not illustrated), a control circuit (control unit, one or more processors), and a measurement unit having a time measurement function, etc. The memories store instructions. In addition, the memories store optical system data and individual lens adjustment data corresponding to the state of the imaging optical system, such as the zoom lens 103, aperture unit 104, and focus lens 106, in the form of tables. The control circuit that, upon execution of the instructions, operate to control an optical member according to operation of the operation member using a control method selected from a plurality of control method. More specifically, the control circuit operates to control the optical member using an external control signal from an external device without using the operation member in a case where a first control method is selected among the plurality of control methods, and restrict control of the optical member using the external control signal in a case where a second control method is selected among the plurality of control methods. The lens control unit 101 uses data corresponding to the current state of the imaging optical system for control.

The lens-camera communication unit 102 of the lens apparatus 100 includes communication terminals for communicating with the lens-camera communication unit 202 of the camera body 200. The lens control unit 101 is configured to transmit and receive information such as focus detection information, photometric information, and identification (ID) information to and from the lens-camera communication unit 202 via the lens-camera communication unit 102. The lens control unit 101 is further configured to receive, via the lens-camera communication unit 102, control commands from the camera control unit 201 relating to a focal length changing operation, a light amount adjustment operation, and a focusing operation, and to receive requests for transmission of optical system data, individual lens adjustment data, and states of various operation members.

The lens control unit 101 is a control unit that controls operations of respective components within the lens apparatus 100. The lens control unit 101 is configured to respond to control commands relating to focal length adjustment, light amount adjustment, or focusing. According to such control commands, the lens control unit 101 outputs control signals to a zoom-lens control unit 107, an aperture control unit 108, or a focus-lens control unit 110 to drive a zoom lens 103, an aperture unit 104, or a focus lens 106, respectively. Thereby, the lens control unit 101 performs autofocus (AF) processing for controlling a focal length changing operation by the zoom lens 103, a light amount adjustment operation by the aperture unit 104, or a focusing operation by the focus lens 106.

The lens control unit 101 is configured to detect an operation amount of each operation ring using, for example, a potentiometer that converts a rotational amount of the operation ring into a voltage. The lens control unit 101 drives the focus lens 106 by issuing a command to the focus-lens control unit 110 according to an operation amount of the focus operation ring 112, thereby controlling a focusing operation. The lens control unit 101 also drives the aperture unit 104 by issuing a command to the aperture control unit 108 according to an operation amount of the aperture operation ring 113, thereby controlling an operation for adjusting a light amount. The lens control unit 101 drives the zoom lens 103 by issuing a command to the zoom-lens control unit 107 according to an operation amount of the zoom operation ring 111, thereby controlling an operation for changing a focal length.

The imaging optical system includes a zoom lens 103 configured to perform magnification variation, an aperture unit 104 configured to adjust a light amount, an image stabilizing lens 105, and a focus lens 106 configured to perform focusing.

The zoom lens 103 is movable in a direction along an optical axis OA indicated by a broken line in Fig. 10 (optical axis direction). A position of the zoom lens 103 is detected using a position detection sensor such as a photo-interrupter, and position data is output to the lens control unit 101. The zoom-lens control unit 107 outputs a drive signal in response to a command from the lens control unit 101 to drive an actuator such as a stepping motor or an ultrasonic motor, thereby moving the zoom lens 103 to perform focal length adjustment.

The aperture unit 104 includes aperture blades and a sensor such as a Hall element. A state of the aperture blades is detected by the sensor and output to the lens control unit 101. The aperture control unit 108 outputs a drive signal in response to a command from the lens control unit 101 to drive an actuator such as a stepping motor, thereby adjusting a light amount by the aperture unit 104.

The image stabilizing lens 105 is movable in a direction orthogonal to the optical axis OA to reduce image blur caused by camera shake or the like. An image-stabilizing-lens control unit 109 outputs a drive signal in response to a command from the lens control unit 101, based on shake detected by a shake sensor (not illustrated) such as a vibration gyro, to drive an image stabilizing actuator. Thereby, image stabilization processing for controlling a shift operation of the image stabilizing lens 105 is performed.

The focus lens 106 is movable along the optical axis direction. A position of the focus lens 106 is detected using a position detection sensor such as a photo-interrupter, and position data is output to the lens control unit 101. The focus-lens control unit 110 outputs a drive signal in response to a command from the lens control unit 101 to drive an actuator such as a stepping motor or an ultrasonic motor, thereby moving the focus lens 106 to perform focusing. The focus lens 106 also compensates for image plane variation associated with magnification variation performed by the zoom lens 103.

The switching-state input unit 115 outputs an electrical signal to the lens control unit 101 while the switching operation unit 114 is being operated. Thereby, the lens control unit 101 is configured to detect that the switching operation unit 114 is being operated. The lens control unit 101 controls the zoom lens 103, the focus lens 106, and the aperture unit 104 in accordance with user operations of the zoom operation ring 111, the focus operation ring 112, and the aperture operation ring 113, respectively, using a control method selected by the selector.

Hereinafter, seventh through eleventh embodiments will be described in detail.

### SEVENTH EMBODIMENT

First, a seventh embodiment will be described with reference to Figs. 10, 11, 13A, 13B, and 14. The present embodiment relates to a control instruction unit that is enabled by a control mode (operation mode or control method) selected for control of a zoom lens 103.

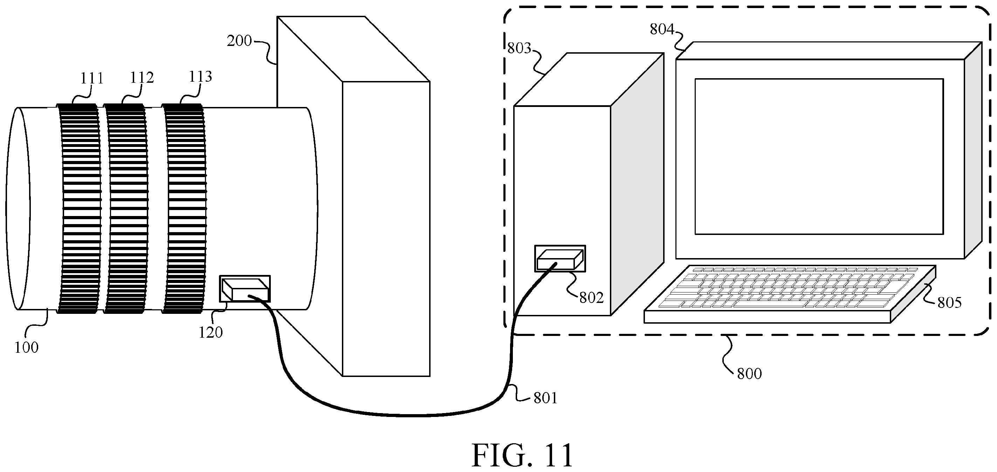

Fig. 11 illustrates a connection configuration of a lens apparatus 100, a camera body 200, and a PC 800. The lens apparatus 100 is connected to the camera body 200, and a lens control unit 101 and a camera control unit 201 are communicably coupled to each other via lens-camera communication units 102 and 202. The lens apparatus 100 is also connected to a USB connector (connection terminal) 802 provided on a body 803 of the PC 800 via an external-device interface 120 and a USB cable 801. The PC 800 includes the body 803, a monitor 804, a keyboard 805, and a mouse (not illustrated).

In the present embodiment, each of the camera body 200 and the PC 800 is an external device of the lens apparatus 100. The lens apparatus 100 is an optical apparatus configured to communicate with an external device. Although electrical devices such as the camera body 200 and the PC 800 are described as examples of external devices in the present embodiment, the external devices are not limited to this example. The external device may be another electronic apparatus, such as a mobile terminal or a tablet, which is communicable via a wired or wireless connection (electronic apparatus different from an image pickup apparatus).

Due to this configuration, the zoom lens 103 of the lens apparatus 100 is operable according to three types of drive instruction operations. A first drive instruction is a drive instruction based on operation of a zoom operation ring 111. A second drive instruction is a drive instruction from the camera control unit 201 (i.e., a drive instruction via camera-lens communication). A third drive instruction is a drive instruction from the PC 800 (i.e., a drive instruction via communication through the USB cable 801).

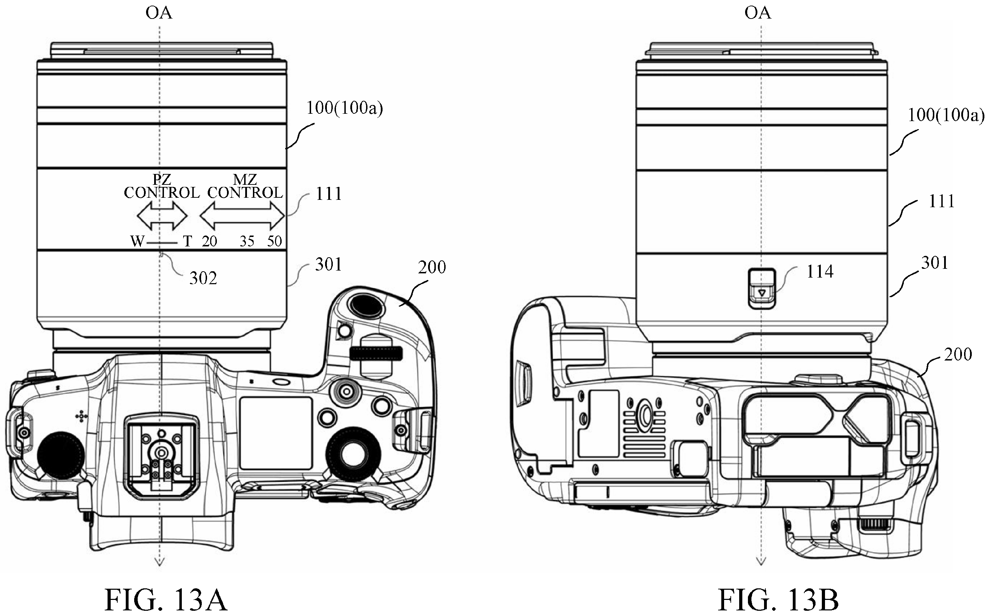

Next, details of control modes (operation modes or control methods) for the zoom lens 103 set by the zoom operation ring 111, and a method of switching between two control modes, will be described with reference to Figs. 13A and 13B.

Figs. 13A and 13B illustrate the zoom operation ring 111 and an exterior barrel 301 of the lens apparatus 100 (100a). Figs. 13A and 13B are views viewed from different directions. The exterior barrel 301 includes a PZ (power zoom, power mode)/MZ (manual zoom, manual mode) switch (SW), which serves as a switching operation unit 114, and a focal-length operation indicator 302. The zoom operation ring 111 is rotatable by a user about an optical axis OA within a ring movable range.

In a case where the focal-length operation indicator 302 points within a PZ control range, the lens control unit 101 sets the control mode of the zoom operation ring 111 to a PZ mode (PZ control mode, first method). The zoom operation ring 111 includes a neutral position return mechanism that holds the zoom operation ring 111 at a neutral position within the PZ control range by a force applied from, for example, a torsion spring toward the neutral position. In a case where the zoom operation ring 111 is not operated within the PZ control range, the focal-length operation indicator 302 is held at the neutral position. In a case where the focal-length operation indicator 302 points to the neutral position within the PZ control range, the lens control unit 101 stops controlling the zoom lens 103. In a case where the focal-length operation indicator 302 points in an indicator T direction (TELE direction) from the neutral position, the lens control unit 101 drives the zoom lens 103 in the TELE direction. On the other hand, in a case where the focal-length operation indicator 302 points in an indicator W direction (WIDE direction) from the neutral position, the lens control unit 101 drives the zoom lens 103 in the WIDE direction.

On the other hand, in a case where the focal-length operation indicator 302 points within an MZ control range, the lens control unit 101 sets the control mode of the zoom operation ring 111 to an MZ mode (MZ control mode, second method). In the MZ mode, the zoom lens 103 is driven to a position corresponding to a focal length value indicated by the focal-length operation indicator 302 based on rotational operation of the zoom operation ring 111 by the user. Switching of the focal-length operation indicator 302 from the PZ control range to the MZ control range, or from the MZ control range to the PZ control range, is performed by the user sliding the PZ/MZ switch of the switching operation unit 114 to a switching position.

In the present embodiment, the user is able to switch between the PZ mode and the MZ mode by operating the zoom operation ring 111 and the switching operation unit 114. The PZ mode is a mode in which relative drive control based on power zoom is performed, in which the zoom lens 103 is driven in a direction corresponding to an operation direction on the basis of the neutral position. The MZ mode is a mode in which absolute drive control to a focal length instructed by the zoom operation ring 111 is performed, that is, a mode in which the zoom lens 103 is driven to a focal length instructed by the zoom operation ring 111.

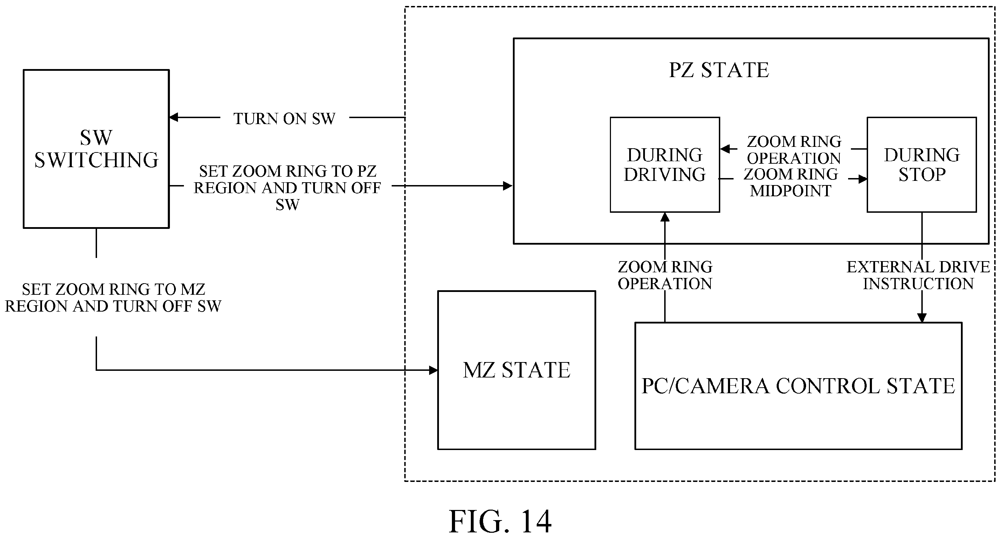

Next, control modes of the zoom lens 103 (PZ mode and MZ mode), and driving of the zoom lens 103 in response to drive instructions from the zoom operation ring 111, the camera control unit 201, and the PC 800, will be described with reference to Fig. 14. Fig. 14 is a state transition diagram illustrating a control state of the zoom lens 103 of the lens apparatus 100.

First, a PZ state (an operation state in the PZ mode) will be described. In the PZ state, the zoom lens 103 is driven in relative position control by the user operating the zoom operation ring 111. In a case where the zoom operation ring 111 is positioned at the neutral position described above, driving of the zoom lens 103 is stopped.

In the PZ state, in a case where the zoom lens 103 is being driven by the operation of the zoom operation ring 111, the lens control unit 101 does not accept a drive instruction from the PC 800 or the camera control unit 201. On the other hand, in a case where the zoom operation ring 111 is at the neutral position and the zoom lens 103 is stopped, the lens control unit 101 accepts a drive instruction from the PC 800 or the camera control unit 201.

However, even when the zoom lens 103 is being driven by a drive instruction from an external device, if a drive instruction is issued via the zoom operation ring 111, the lens control unit 101 immediately transitions to the PZ state, and the zoom lens 103 performs an operation indicated by the zoom operation ring 111.

The PC 800 or the camera control unit 201 attaches information indicating a transmission source (identification information for identifying an operation unit of a transmission origin) to a drive instruction when transmitting the drive instruction. For example, identification information is output to the lens control unit 101 together with the drive instruction, or identification information is included as part of the drive instruction and output to the lens control unit 101. Thereby, the lens control unit 101 is able to recognize (identify) an apparatus (operation unit), which is the transmission source of the received drive instruction.

Next, an MZ state (an operation state in the MZ mode, that is, an absolute position drive state to a position instructed by the zoom operation ring 111) will be described. A transition from the PZ state to the MZ state is performed by operating the switching operation unit 114 to a switching state and positioning the zoom operation ring 111 within the MZ region. In the MZ state, the zoom lens 103 is driven in absolute position control so as to achieve a focal length instructed by the zoom operation ring 111.

As illustrated in Fig. 14, in the MZ state, the lens control unit 101 does not accept a drive instruction from the PC 800 or the camera control unit 201. That is, in the MZ state, regardless of whether the zoom lens 103 is stopped or being driven, the lens control unit 101 does not control the zoom lens 103 using the drive instruction from the PC 800 or the camera control unit 201.

Thus, in the present embodiment, the lens control unit 101 changes whether to accept the drive instruction from the PC 800 or the camera control unit 201 according to the control mode of the zoom lens 103. Thereby, in the MZ state, this embodiment can avoid a condition in which the zoom lens 103 is moved based on the drive instruction from the PC 800 or the camera control unit 201, resulting in a mismatch between a position indicated by the zoom operation ring 111 and an actual position of the zoom lens 103.

### EIGHTH EMBODIMENT

Next, an eighth embodiment will be described with reference to Figs. 10, 11, 15A, 15B, and 16. The present embodiment relates to a control instruction unit that is enabled by a control mode (operation mode, control method) selected for control of a focus lens 106. Descriptions of Figs. 10 and 11 will be omitted because they are substantially the same as those of the seventh embodiment.

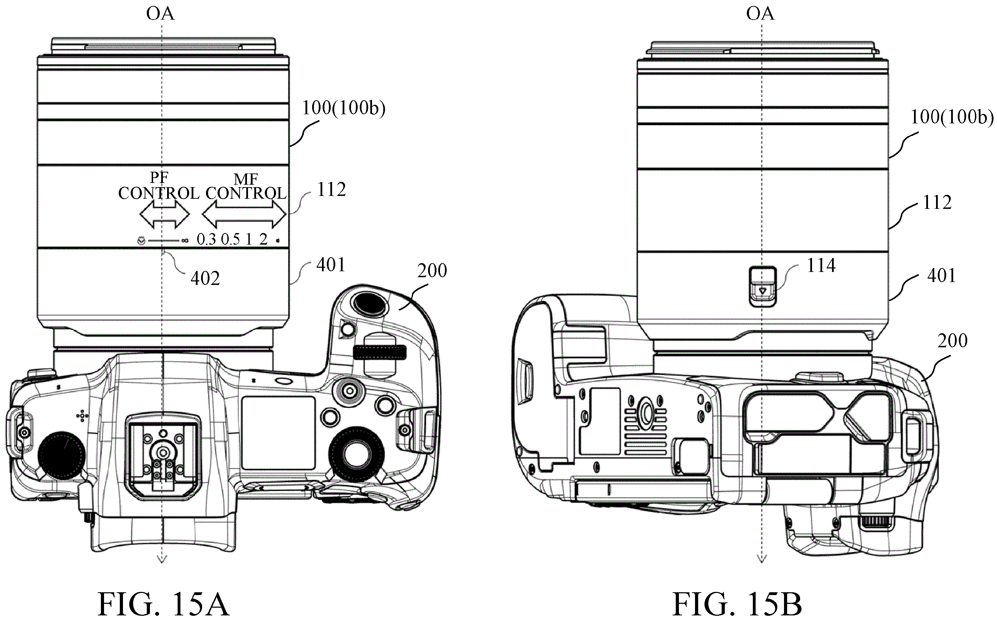

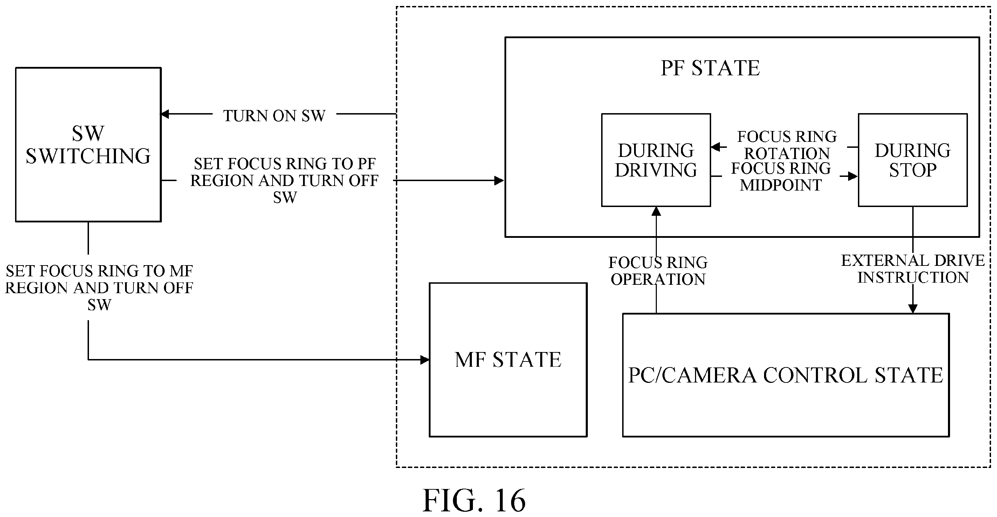

Details of control modes of a focus lens set by a focus operation ring 112, and a switching method between two control modes, will be described with reference to Figs. 15A, 15B, and 16.

Figs. 15A and 15B illustrate a focus operation ring 112 and an exterior barrel 401 of a lens apparatus 100 (100b). The exterior barrel 401 includes a PF (power focus, power mode)/MF (manual focus, manual mode) switch (SW), which serves as a switching operation unit 114, and an object-distance operation indicator 402. The focus operation ring 112 is rotatable by a user about an optical axis OA within a ring movable range.

In a case where the object-distance operation indicator 402 points within a PF control range, the lens control unit 101 sets a control mode of the focus operation ring 112 to a PF mode (PF control mode, first method). The focus operation ring 112 includes a neutral position return mechanism configured to hold the focus operation ring 112 at a neutral position within the PF control range by a force applied from, for example, a torsion spring toward the neutral position. In a case where the focus operation ring 112 is not operated within the PF control range, the object-distance operation indicator 402 is held at the neutral position. In a case where the object-distance operation indicator 402 points to the neutral position within the PF control range, the lens control unit 101 stops controlling the focus lens 106. In a case where the object-distance operation indicator 402 points toward an indicator infinity direction from the neutral position, the lens control unit 101 drives the focus lens 106 toward the infinity direction. On the other hand, in a case where the object-distance operation indicator 402 points toward an indicator close-distance direction from the neutral position, the lens control unit 101 drives the focus lens 106 toward the close-distance direction.

On the other hand, in a case where the object-distance operation indicator 402 points within an MF control range, the lens control unit 101 sets the control mode of the focus operation ring 112 to an MF mode (MF control mode, second method). In the MF mode, the focus lens 106 is driven to a position corresponding to an object distance value indicated by the object-distance operation indicator 402 based on rotational operation of the focus operation ring 112 by the user. Switching of the object-distance operation indicator 402 from the PF control range to the MF control range, or from the MF control range to the PF control range, is performed by sliding the PF/MF switch of the switching operation unit 114.

In the present embodiment, the user is able to switch between the PF mode and the MF mode by operating the focus operation ring 112 and the switching operation unit 114. The PF mode is a mode in which relative drive control based on power focus is performed, in which the focus lens 106 is driven in a direction corresponding to an operation direction on the basis of the neutral position. The MF mode is a mode in which absolute drive control is performed, in which the focus lens 106 is driven to an object distance instructed by the focus operation ring 112.

Next, control modes of the focus lens 106 (PF mode and MF mode), and driving of the focus lens 106 in response to drive instructions from the focus operation ring 112, a camera control unit 201, and a PC 800, will be described with reference to Fig. 16. Fig. 16 is a state transition diagram illustrating a control state of the focus lens 106 of the lens apparatus 100.

First, a PF state, which is an operation state in the PF mode, will be described. In the PF state, the focus lens 106 is driven in relative position control by operating the focus operation ring 112 by the user. In a case where the focus operation ring 112 is disposed at the neutral position described above, driving of the focus lens 106 is stopped.

In the PF state, in a case where the focus lens 106 is being driven by operation of the focus operation ring 112, the lens control unit 101 does not accept a drive instruction from the PC 800 or the camera control unit 201. On the other hand, in a case where the focus operation ring 112 is located at the neutral position and the focus lens 106 is stopped, the lens control unit 101 accepts a drive instruction from the PC 800 or the camera control unit 201.

However, even when the focus lens 106 is being driven by a drive instruction from an external device, if a drive instruction is issued via the focus operation ring 112, the lens control unit 101 immediately transitions to the PF state, and the focus lens 106 performs an operation indicated by the focus operation ring 112.

The PC 800 or the camera control unit 201 attaches information indicating a transmission source (identification information for identifying an operation unit of a transmission origin) to a drive instruction when transmitting the drive instruction. For example, the identification information is output to the lens control unit 101 together with the drive instruction, or the identification information is included as part of the drive instruction and output to the lens control unit 101. Thereby, the lens control unit 101 is able to recognize (identify) an apparatus (operation unit), which is the transmission source of the received drive instruction.

Next, an MF state, which is an operation state in the MF mode, that is, an absolute position drive state to a position instructed by the focus operation ring 112, will be described. A transition from the PF state to the MF state is performed by operating the switching operation unit 114 to a switching state and positioning the focus operation ring 112 within an MF region. In the MF state, the focus lens 106 is driven in absolute position control so as to achieve an object distance instructed by the focus operation ring 112.

As illustrated in Fig. 16, in the MF state, the lens control unit 101 does not accept a drive instruction from the PC 800 or the camera control unit 201. That is, in the MF state, regardless of whether the focus lens 106 is stopped or being driven, the lens control unit 101 does not control the focus lens 106 using the drive instruction from the PC 800 or the camera control unit 201.

Thus, in the present embodiment, the lens control unit 101 changes whether to accept a drive instruction from the PC 800 or the camera control unit 201 according to the control mode of the focus lens 106. In the MF state, the present embodiment can avoid a condition in which the focus lens 106 is moved by a drive instruction from the PC 800 or the camera control unit 201, resulting in a mismatch between a position indicated by the focus operation ring 112 and an actual position of the focus lens 106.

### NINTH EMBODIMENT

Next, a ninth embodiment will be described with reference to Figs. 10, 11, 17A, 17B, and 18. The present embodiment relates to a control instruction unit that is enabled depending on a control mode (operation mode, control method) selected for control of an aperture unit 104. Descriptions of Figs. 10 and 11 will be omitted because they are substantially the same as those of the seventh embodiment.

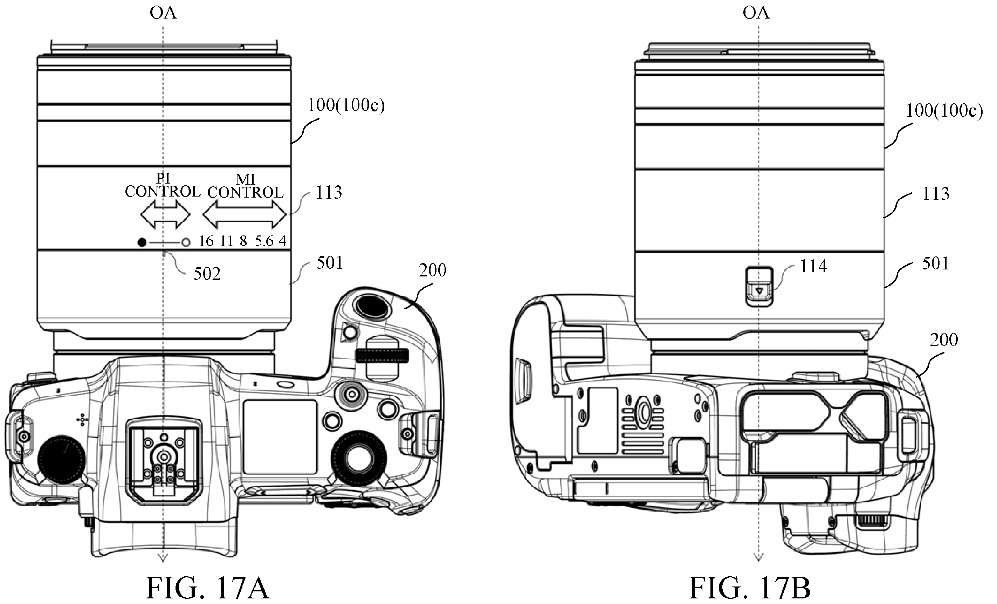

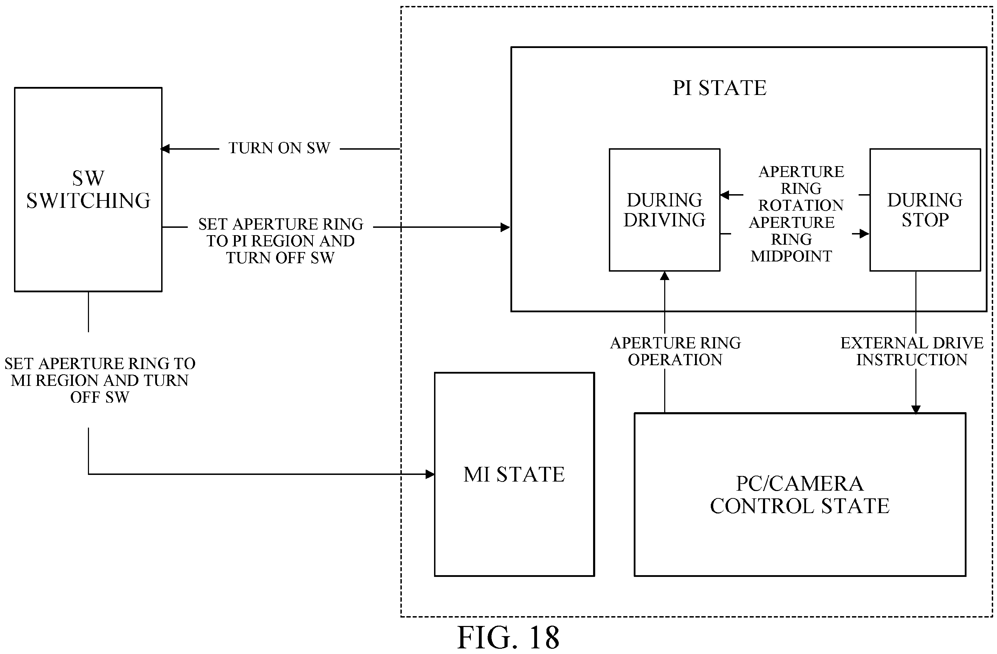

Details of control modes of the aperture unit 104 set by an aperture operation ring 113, and a method of switching between two control modes, will be described with reference to Figs. 17A, 17B, and 18.

Figs. 17A and 17B illustrate an aperture operation ring 113 and an exterior barrel 501 of a lens apparatus 100 (100c). The exterior barrel 501 includes a PI (power iris, power mode)/MI (manual iris, manual mode) switch (SW), which serves as a switching operation unit 114, and an aperture operation indicator 502. The aperture operation ring 113 is rotatable by a user about an optical axis OA within a ring movable range.

In a case where the aperture operation indicator 502 points within a PI control range, the lens control unit 101 sets a control mode of the aperture operation ring 113 to a PI mode (PI control mode, first method). The aperture operation ring 113 includes a neutral position return mechanism configured to hold the aperture operation ring 113 at a neutral position within the PI control range by a force applied from, for example, a torsion spring toward the neutral position. In a case where the aperture operation ring 113 is not operated within the PI control range, the aperture operation indicator 502 is held at the neutral position. In a case where the aperture operation indicator 502 points to the neutral position within the PI control range, the lens control unit 101 stops controlling the aperture unit 104. In a case where the aperture operation indicator 502 points toward an indicator opening direction from the neutral position, the lens control unit 101 drives the aperture unit 104 in the opening direction. On the other hand, in a case where the aperture operation indicator 502 points toward an indicator closing direction from the neutral position, the lens control unit 101 drives the aperture unit 104 in the closing direction.

On the other hand, in a case where the aperture operation indicator 502 points within an MI control range, the lens control unit 101 sets the control mode of the aperture operation ring 113 to an MI mode (MI control mode, second method). In the MI mode, the aperture unit 104 is driven to a position corresponding to an aperture value indicated by the aperture operation indicator 502 by rotational operation of the aperture operation ring 113 by the user, thereby changing an open area amount of the aperture unit 104. Switching of the aperture operation indicator 502 from the PI control range to the MI control range, or from the MI control range to the PI control range, is performed by sliding the PI/MI switch of the switching operation unit 114.

In the present embodiment, the user is able to switch between the PI mode and the MI mode by operating the aperture operation ring 113 and the switching operation unit 114. The PI mode is a mode in which relative drive control based on power iris is performed, in which an open area amount of the aperture unit 104 is changed in a direction corresponding to an operation direction on the basis of the neutral position. The MI mode is a mode in which absolute drive control is performed, in which the open area amount of the aperture unit 104 is changed to an aperture value instructed by the aperture operation ring 113.

Next, control modes of the aperture unit 104 (PI mode and MI mode), and driving of the aperture unit 104 in response to drive instructions from the aperture operation ring 113, a camera control unit 201, and a PC 800, will be described with reference to Fig. 18. Fig. 18 is a state transition diagram illustrating control states of the aperture unit 104 of the lens apparatus 100.

First, a PI state, which is an operation state in the PI mode, will be described. In the PI state, the aperture unit 104 is driven in relative position control by operating the aperture operation ring 113 by the user. When the aperture operation ring 113 is positioned at the neutral position described above, driving of the aperture unit 104 is stopped.

In the PI state, in a case where the aperture unit 104 is being driven by operating the aperture operation ring 113, the lens control unit 101 does not accept a drive instruction from the PC 800 or the camera control unit 201. On the other hand, in a case where the aperture operation ring 113 is positioned at the neutral position and the aperture unit 104 is stopped, the lens control unit 101 accepts a drive instruction from the PC 800 or the camera control unit 201.

However, even when the aperture unit 104 is being driven by a drive instruction from an external device, if a drive instruction is issued via the aperture operation ring 113, the lens control unit 101 immediately transitions to the PI state, and the aperture unit 104 performs an operation indicated by the aperture operation ring 113.

The PC 800 or the camera control unit 201 attaches information indicating a transmission source (identification information for identifying an operation unit of a transmission origin) to a drive instruction when transmitting the drive instruction. For example, the identification information is output to the lens control unit 101 together with the drive instruction, or the identification information is included as part of the drive instruction and output to the lens control unit 101. Thereby, the lens control unit 101 is able to recognize (identify) an apparatus that is the transmission source of the received drive instruction.

Next, an MI state, which is an operation state in the MI mode, that is, an absolute position drive state to a position instructed by the aperture operation ring 113, will be described. A transition from the PI state to the MI state is performed by operating the switching operation unit 114 to a switching state and positioning the aperture operation ring 113 within an MI region. In the MI state, the aperture unit 104 is driven in absolute position control so as to achieve an aperture value instructed by the aperture operation ring 113.

As illustrated in Fig. 18, in the MI state, the lens control unit 101 does not accept a drive instruction from the PC 800 or the camera control unit 201. That is, in the MI state, regardless of whether the aperture unit 104 is stopped or being driven, the lens control unit 101 does not control the aperture unit 104 using the drive instruction from the PC 800 or the camera control unit 201.

Thus, in the present embodiment, the lens control unit 101 changes whether to accept a drive instruction from the PC 800 or the camera control unit 201 according to the control mode of the aperture unit 104. In the MI state, the present embodiment can avoid a condition in which an open area amount of the aperture unit 104 is changed by a drive instruction from the PC 800 or the camera control unit 201, resulting in a mismatch between an open area amount indicated by the aperture operation ring 113 and an actual open area amount of the aperture unit 104.

### TENTH EMBODIMENT

Next, with reference to Figs. 10, 11, 19A, 19B, and 20, a tenth embodiment will be described. This embodiment relates to a control instruction unit that is enabled by a control mode (operation mode, control method) selected for control of the aperture unit 104. Descriptions of Figs. 10 and 11 are the same as those of the seventh embodiment and therefore will be omitted.

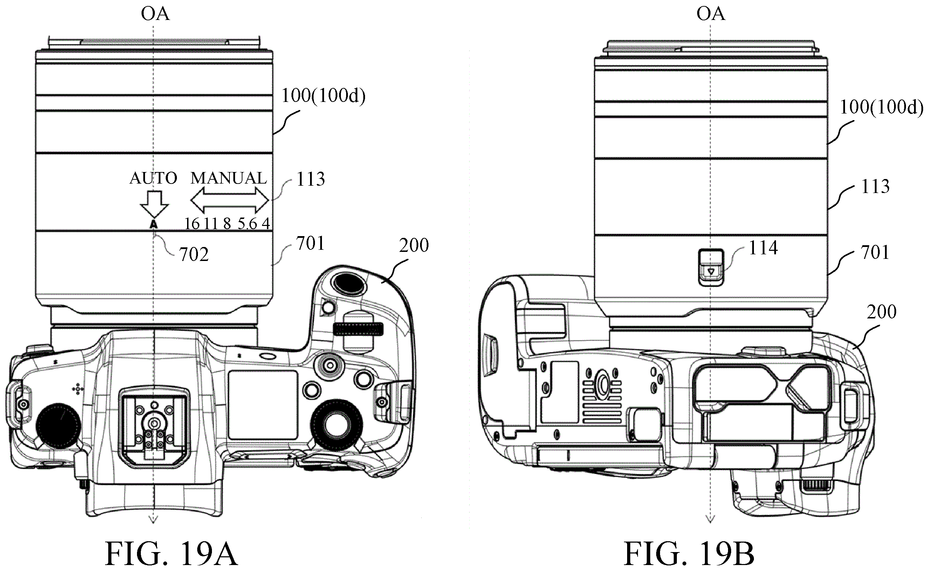

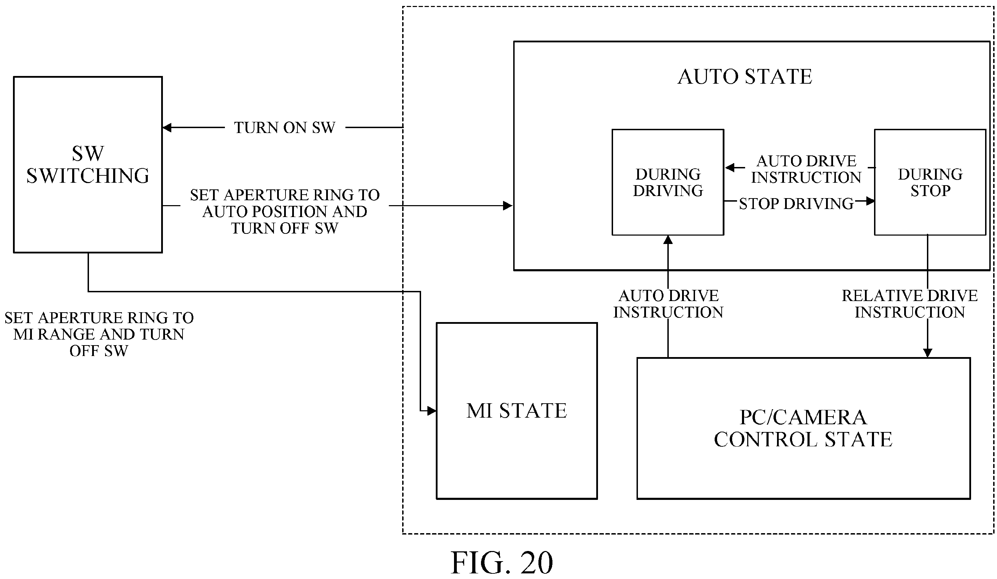

With reference to Figs. 19A, 19B, and 20, details of the control modes of the aperture unit 104 set by the aperture operation ring 113 and a method of switching between two control modes will be described.

Figs. 19A and 19B illustrate an aperture operation ring 113 and an exterior barrel 701 of a lens apparatus 100 (100d). The exterior barrel 701 includes an aperture operation ring release switch serving as a switching operation unit 114 and an aperture operation indicator 702. The aperture operation ring 113 is rotatable by a user about an optical axis OA within a movable range of the ring.

In a case where the aperture operation indicator 702 indicates automatic control, the lens control unit 101 sets a control mode of the aperture operation ring 113 to an aperture automatic-control mode (automatic mode (Auto), first method). In the automatic control mode, the lens control unit 101 receives, via the lens-camera communication unit 102, a light-amount adjustment control command corresponding to an aperture value set by an operation unit 207 of the camera body 200 or an aperture value set based on luminance information. The lens control unit 101 outputs a command to the aperture control unit 108 in response to the received light-amount adjustment control command to drive the aperture unit 104.

On the other hand, in a case where the aperture operation indicator 702 indicates manual (Manual) control, the lens control unit 101 sets the control mode of the aperture operation ring 113 to an aperture manual-control mode (MI mode, second method). In the manual control mode, the lens control unit 101 drives the aperture unit 104 to a position corresponding to an aperture value indicated by the aperture operation indicator 702. Switching of the aperture operation indicator 702 from the automatic control range to the manual control range or from the manual control range to the automatic control range is enabled by sliding an aperture operation ring unlock switch of the switching operation unit 114.

In this embodiment, the user can switch between the automatic mode and the MI mode by operating the aperture operation ring 113 and the switching operation unit 114. The MI mode is a mode in which absolute position control is performed to change an open area amount to an aperture value instructed by the aperture operation ring 113, that is, a mode in which the open area amount of the aperture unit 104 is changed to an aperture value instructed by the aperture operation ring 113.

Next, with reference to Fig. 20, control modes of the aperture unit 104 (automatic mode and MI mode) and driving of the aperture unit 104 in response to respective drive instructions from the aperture operation ring 113, the camera control unit 201, and a PC 800 will be described. Fig. 20 is a state transition diagram illustrating a control state of the aperture unit 104 of the lens apparatus 100.

First, the automatic state, which is an operation state in the automatic mode, will be described. In the automatic state, the aperture unit 104 is driven to a predetermined position by an instruction from the camera control unit 201. In a case where the aperture unit 104 is operating in the automatic state, the lens control unit 101 does not accept a drive instruction from the PC 800 or the camera control unit 201. On the other hand, in a case where the aperture unit 104 is stopped, the lens control unit 101 accepts a drive instruction from the PC 800 or the camera control unit 201.

However, even when the aperture unit 104 is operating by a drive instruction from the PC 800, if a drive instruction is issued by the camera control unit 201, the lens control unit 101 immediately transitions to the automatic state, and the aperture unit 104 performs an operation instructed by the camera control unit 201.

When transmitting a drive instruction, the PC 800 attaches information indicating a transmission source (identification information for identifying an operation unit of a transmission origin) to a drive instruction when transmitting the drive instruction. For example, the identification information is output to the lens control unit 101 together with the drive instruction, or is included as part of the drive instruction and output to the lens control unit 101. Thus, the lens control unit 101 is configured to recognize (identify) an apparatus (operation unit), which is the transmission source of the received drive instruction.

Next, an MI state (an operation state in the MI mode, that is, an absolute position drive state to a position indicated by the aperture operation ring 113) will be described. A transition from the automatic state to the MI state is performed by operating the switching operation unit 114 to a switching state and positioning the aperture operation ring 113 in an MI region. In the MI state, the aperture unit 104 is driven in absolute position control so as to achieve an aperture value instructed by the aperture operation ring 113.

As illustrated in Fig. 20, in the MI state, the lens control unit 101 does not accept a drive instruction from the PC 800 or the camera control unit 201. That is, in the MI state, the lens control unit 101 does not control the aperture unit 104 using the drive instruction from the PC 800 or the camera control unit 201 regardless of whether the aperture unit 104 is stopped or operating.

Thus, in this embodiment, the lens control unit 101 changes control of whether to accept a drive instruction from the PC 800 according to the control mode of the aperture unit 104. Thereby, in the MI state, this embodiment can avoid a condition in which an open area amount of the aperture unit 104 is changed by the drive instruction from the PC 800, resulting in a mismatch between an indicated open area amount of the aperture operation ring 113 and an actual open area amount of the aperture unit 104.

### ELEVENTH EMBODIMENT

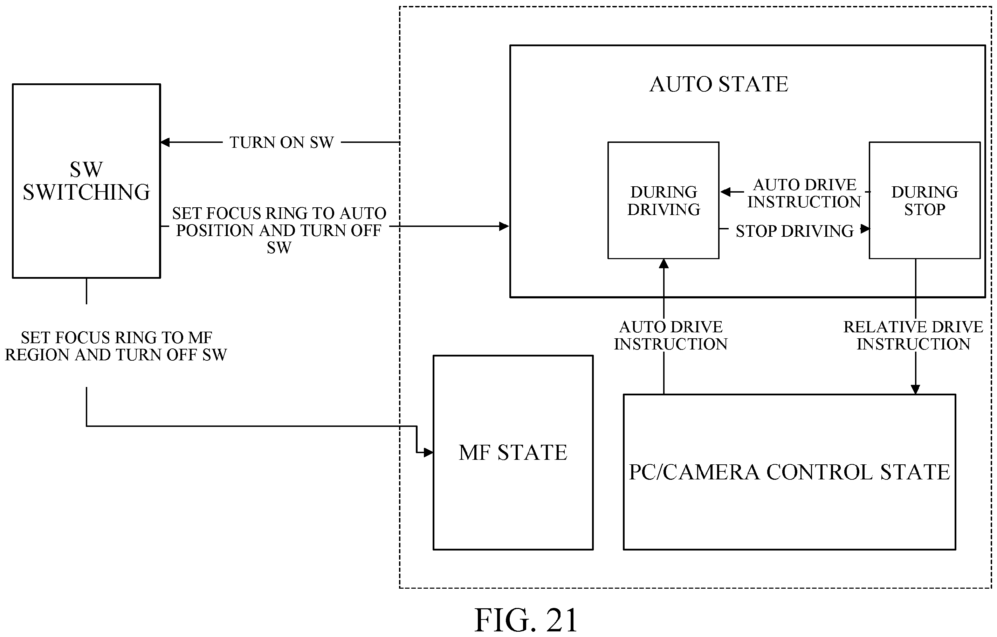

Next, with reference to Fig. 21, an eleventh embodiment will be described. Fig. 21 is a state transition diagram illustrating a control state of a focus lens 106 in a lens apparatus 100. In this embodiment, the lens control unit 101 is configured to switch control modes of the focus lens 106 between an automatic mode and an MF mode. In the automatic mode, the lens control unit 101 drives the focus lens 106 based on a drive instruction from the camera control unit 201 to perform autofocusing. In the MF mode, the lens control unit 101 drives the focus lens 106 to an object distance instructed by the focus operation ring 112. In this embodiment, the lens control unit 101 may be configured to accept a drive instruction from a PC 800 only when the focus lens 106 is stopped in the automatic mode, while not accepting a drive instruction from the PC 800 in the MF mode.

### TWELFTH EMBODIMENT

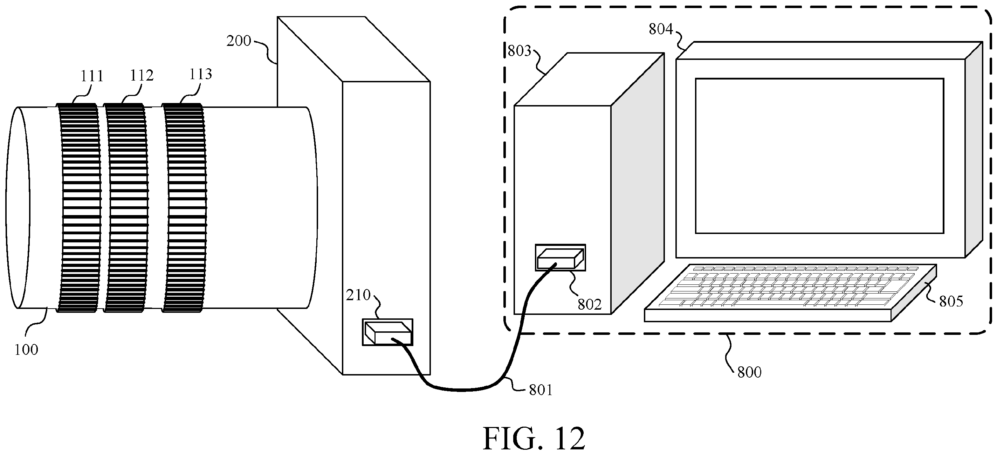

Next, with reference to Fig. 12, a twelfth embodiment will be described. Fig. 12 illustrates a connection state of a lens apparatus 100, a camera body 200, and a PC (external device) 800. The lens apparatus 100 is connected to the camera body 200, and the lens control unit 101 and the camera control unit 201 are configured to communicate with each other via lens-camera communication units 102 and 202. The camera body 200 is connected to a USB connector (connection terminal) 802 provided on a body 803 of the PC 800 via an external device connector 210 and a USB cable 801. The lens control unit 101 is configured to determine whether to permit or prohibit an operation based on a drive instruction by using identification information added to communication from the camera control unit 201, which is information indicating an apparatus that is a transmission source of the drive instruction.

Thus, in each embodiment, a control unit (the lens control unit 101) is configured to control an optical member without using an operation member by using an external control signal (drive instruction) output from the camera body 200 or an external device such as the PC 800. The control unit is further configured to restrict control of the optical member based on the external control signal in accordance with a control method (control mode).

The control unit may be configured to restrict control of the optical member based on the external control signal in accordance with both the control method and a drive state of the optical member resulting from an operation of an operation member. In a case where the control method is a first method (that is, in a case where the first method is selected as the control method from among a plurality of methods by a selector), the control unit may restrict control of the optical member based on the external control signal in accordance with the drive state of the optical member resulting from an operation of the operation member. In a case where the optical member is being driven, the control unit may restrict control of the optical member based on the external control signal, and in a case where the optical member is not being driven, the control unit may not restrict control of the optical member based on the external control signal. In a case where the control method is a second method (that is, in a case where the second method is selected as the control method from among the plurality of methods by the selector), the control unit may restrict control of the optical member based on the external control signal regardless of the drive state.

Here, restricting control of the optical member unit means that the control unit does not control the optical member using the acquired external control signal. For example, the control unit may restrict control of the optical member by not receiving the external control signal or by ignoring the external control signal even if it is received. However, the embodiments are not limited to this example, and as a restriction on control of the optical member, the control unit may perform a warning operation such as displaying a warning or outputting an audible warning.

In the first method, the control unit may perform relative position control on the optical member according to an operation of the operation member, that is, drives the optical member in a direction corresponding to the operation from the current position or drives the optical member in a drive direction corresponding to the operation direction of the operation member. In the second method, the control unit may perform absolute position control on the optical member in accordance with the operation of the operation member, that is, drives the optical member to a target position or drives the operation member to a target position according to an operation position of the operation member.

In each embodiment, in a case where the external control signal is a signal from a specific external device, the control unit may be configured not to restrict control in a case where the signal is a signal from the specific external device, even in a situation where the control is to be restricted if the external control signal is a signal from an external device. The specific external device may be set in advance or may be arbitrarily set by the user.

In each embodiment, control in accordance with a drive instruction from the camera body or an external device such as a PC is restricted depending on the control mode and an operation state of the optical member. Thus, a difference does not occur between an actual position of the optical member and an instructed position. Since the optical member cannot be driven by a large amount by an external device, it is possible to avoid a rapid change in angle of view when the optical member is operated. Therefore, each embodiment can provide an optical apparatus with improved operability.

### OTHER EMBODIMENTS

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)TM), a flash memory device, a memory card, and the like.

Each embodiment can provide an optical apparatus, a control method of the same, and a program, each of which can properly control an optical member. Each embodiment can provide an optical apparatus with improved operability.

While the present disclosure has been described with reference to embodiments, it is to be understood that the present disclosure is not limited to the disclosed embodiments. The scope of the following claims is to be accorded the broadest interpretation so as to encompass all such modifications and equivalent structures and functions.

## Claims

1. An optical apparatus (100) comprising:
an operation member (111) rotatable by a user;
an indicator (302, 402, 502) indicating a position of the operation member in a rotation direction; and
a control unit (101) configured to control an optical member according to rotation of the operation member,
**characterized in that** the control unit is configured to:
control the optical member using a first control method in a case where the indicator indicates a first range in the rotation direction,
control the optical member using a second control method in a case where the indicator indicates a second range in the rotation direction,
control the optical member, in a case where a state during switching between the first control method and the second control method is a predetermined state, using one of the first control method or the second control method that is selected after the switching, and
restrict control of the optical member in a case where the state is not the predetermined state.

2. The optical apparatus according to claim 1, **characterized in that**, in a case where the state is not the predetermined state, the control unit is configured to maintains a position of the optical member corresponding to the rotation of the operation member under one of the first control method and the second control method before initiation of the switching.

3. The optical apparatus according to claim 1 or 2, further comprising a switching unit configured to perform the switching according to a user operation,
**characterized in that** the predetermined state is a state in which the rotation of the switching unit has been completed.

4. The optical apparatus according to claim 3, **characterized in that** the control unit is configured to determine whether the state is the predetermined state using a signal indicating an operation state of the switching unit.

5. The optical apparatus according to any one of claims 1 to 4, **characterized in that** the control unit is configured to stop controlling the optical member when the operation member is located at a neutral position, in the first control method,
wherein the predetermined state is a state in which the operation member has reached the neutral position after control of the optical member has been restricted in a case where the switching is from the second control method to the first control method.

6. The optical apparatus according to claim 1 or 2, **characterized in that** the control unit is configured to determine whether the state is the predetermined state according to a position of the operation member.

7. The optical apparatus according to claim 1 to 2, **characterized in that** the control unit is configured to start controlling the optical member using the one of the first control method and the second control method selected after the switching, after a predetermined time has elapsed since control of the optical member is restricted.

8. The optical apparatus according to claim 1 to 2, **characterized in that** the control unit is configured to start controlling the optical member using the one of the first control method and the second control method selected after the switching, a predetermined time has elapsed after the rotation of the operation member is completed after control of the optical member is restricted.

9. The optical apparatus according to claim 1 or 2, **characterized in that** the control unit is configured to start controlling the optical member using the one of the first control method and the second control method selected after the switching, in a case where a position of the operation member enters a predetermined range after control of the optical member is restricted.

10. The optical apparatus according to any one of claims 1 to 9, **characterized in that** the control unit is configured to:
perform relative position control of the optical member according to the rotation of the operation member in the first control method, and
perform absolute position control of the optical member according to the rotation of the operation member in the second control method.

11. The optical apparatus according to any one of claims 1 to 9, **characterized in that** the control unit is configured to:
control the optical member regardless of the rotation of the operation member in the first control method, and
control the optical member according to the rotation of the operation member in the second control method.

12. The optical apparatus according to any one of claims 1 to 11, **characterized in that** the control unit is configured to set a driving speed for controlling the optical member, for a predetermined period, to a speed different from a set driving speed when controlling the optical member using the one of the first control method and the second control method selected after the switching.

13. The optical apparatus according to claim 12, **characterized in that** the predetermined period is a period from a start of control of the optical member until a position of the optical member matches a position to which the optical member is to be driven using the one of the first control method and the second control method selected after the switching.

14. An optical apparatus comprising:
an operation member (111) operable by a user; and
a control unit (101) configured to control an optical member according to operation of the operation member using a control method selected from a plurality of control methods,
wherein the control unit is configured to:
control the optical member using an external control signal from an external device without using the operation member in a case where a first control method is selected among the plurality of control methods, and
restrict control of the optical member using the external control signal in a case where a second control method is selected among the plurality of control methods.

15. The optical apparatus according to claim 14, **characterized in that** the control unit is configured to restrict the control of the optical member according to the external control signal using the selected control method and a driving state of the optical member resulting from the operation of the operation member.

16. The optical apparatus according to claim 15, **characterized in that**, in a case where the selected control method is a first control method, the control unit is configured to restrict the control of the optical member according to the external control signal and the driving state.

17. The optical apparatus according to claim 15 or 16, **characterized in that** the control unit is configured to:
restrict the control of the optical member according to the external control signal in a case where the driving state indicates that the optical member is being driven by the operation of the operation member, and
not restrict the control of the optical member according to the external control signal in a case where the driving state indicates that the optical member is not being driven by the operation of the operation member.

18. The optical apparatus according to claim 16, **characterized in that**, in a case where the selected control method is a second control method, the control unit is configured to restrict the control of the optical member according to the external control signal regardless of the driving state.

19. A method for controlling an optical apparatus (100), the method comprising:
obtaining a control method selected from a first control method and a second control method; and
controlling an optical member (103) using a first control method according to rotation of an operation member in a case where the indicator indicates a first range in a rotation direction,
**characterized in that** the controlling of the optical member includes:
controlling the optical member using a second control method according to rotation of the operation member in a case where the indicator indicates a second range in the rotation direction,
controlling the optical member, in a case where a state during switching between the first control method and the second control method is a predetermined state, using one of the first control method or the second control method that is selected after the switching, and
restricting control of the optical member in a case where the state is not the predetermined state.

20. A program that causes a computer to execute the method according to claim 19.
